# EUROPEAN PATENT APPLICATION

(11) **EP 4 485 190 A1**
(43) Date of publication of application: **01.01.2025**
(21) Application number: 22935870.0
(22) Date of filing: 11.08.2022
(51) Int. Cl.: G06F 9/455, G06F 21/56, G06F 21/53, H04L 9/32, H04L 9/06

(54) **SIGNAL PROCESSING DEVICE AND VEHICLE DISPLAY DEVICE COMPRISING SAME**

(30) Priority: 31.03.2022 KR 20220040748
(71) Applicant: LG Electronics Inc., Yeongdeungpo-gu Seoul 07336 (KR)
(72) Inventor: YOON, Jaegu, Seoul 06772 (KR); KIM, Youngtae, Seoul 06772 (KR); JEONG, Daeyoung, Seoul 06772 (KR)
(74) Representative: Vossius & Partner Patentanwälte Rechtsanwälte mbB
(86) International application number: PCT/KR2022/012021
(87) International publication number: WO 2023/191195

(57) **Abstract**

The present disclosure relates to a signal processing device and a vehicle display apparatus including the same. The signal processing device according to an embodiment of the present disclosure includes a processor configured to perform signal processing for display mounted in a vehicle, wherein the processor is configured to execute a server virtual machine and a plurality of guest virtual machines on a hypervisor in the processor, wherein a first guest virtual machine of the plurality of guest virtual machines is configured to operate for a first display, and a second guest virtual machine of the plurality of guest virtual machines is configured to operate for a second display, wherein the server virtual machine is configured to store data to be transmitted to at least one of the first guest virtual machine or the second guest virtual machine in the shared memory, and to transmit a security key to at least one of the first guest virtual machine or the second guest virtual machine. Accordingly, it is possible to increase security during data transmission.

## Description

### BACKGROUND

### 1. Field

The present disclosure relates to a signal processing device and a vehicle display apparatus including the same, and more particularly to a signal processing device capable of performing control such that a plurality of displays in a vehicle display identical images in a synchronized state, and a vehicle display apparatus including the same.

### 2. Description of the Related Art

A vehicle is an apparatus that a driver moves in a desired direction. A representative example of the vehicle is a car.

Meanwhile, a display apparatus for vehicles is mounted in the vehicle for convenience of users who use the vehicle.

For example, a display is disposed in a cluster in order to display various kinds of information. Meanwhile, in order to display vehicle driving information, various displays, such as an audio video navigation (AVN) display, are mounted in the vehicle, in addition to the cluster.

In the case in which the number of displays in the display apparatus for vehicles is increased, however, signal processing for the displays is complicated.

Particularly, signal processing for the displays in the signal processing device becomes complicated. Further, security has become an important issue in data transmission.

### SUMMARY

It is an object of the present disclosure to provide a signal processing device capable of increasing security during data transmission, and a vehicle display apparatus including the signal processing device.

Meanwhile, it is another object of the present disclosure to provide a signal processing device capable of efficiently performing signal processing by using a plurality of virtual machines, and a vehicle display apparatus including the signal processing device.

Meanwhile, it is yet another object of the present disclosure to provide a signal processing device capable of increasing security when data is received from an external server, and a vehicle display apparatus including the signal processing device.

Meanwhile, it is further another object of the present disclosure to provide a signal processing device capable of displaying identical images on a plurality of in-vehicle displays in a synchronized manner, and a vehicle display apparatus including the signal processing device.

Meanwhile, it is further another object of the present disclosure to provide a signal processing device capable of performing high-speed data communication between a plurality of virtual machines, and a vehicle display apparatus including the same.

Meanwhile, it is further another object of the present disclosure to provide a signal processing device capable of performing high-speed data communication even though a plurality of virtual machines is driven by different operating systems, and a vehicle display apparatus including the same.

In accordance with an aspect of the present disclosure, the above and other objects can be accomplished by the provision of a signal processing device including: a shared memory; and a processor configured to perform signal processing for display mounted in a vehicle, wherein the processor is configured to execute a server virtual machine and a plurality of guest virtual machines on a hypervisor in the processor, wherein a first guest virtual machine of the plurality of guest virtual machines is configured to operate for a first display, and a second guest virtual machine of the plurality of guest virtual machines is configured to operate for a second display, wherein the server virtual machine is configured to store data to be transmitted to at least one of the first guest virtual machine or the second guest virtual machine in the shared memory, and to transmit a security key to at least one of the first guest virtual machine or the second guest virtual machine.

Meanwhile, at least one of the first guest virtual machine or the second guest virtual machine may be configured to receive the data stored in the shared memory, and to decrypt the received data based on the security key.

Meanwhile, the server virtual machine may be configured to store data to be transmitted to at least one of the first guest virtual machine or the second guest virtual machine in the shared memory, to encrypt a symmetric key, and to transmit a security key including the encrypted symmetric key to at least one of the first guest virtual machine or the second guest virtual machine.

Meanwhile, the symmetric key may be updated, wherein the server virtual machine may be configured to transmit the security key including the encrypted symmetric key to at least one of the first guest virtual machine or the second guest virtual machine at a first time, and to transmit the security key, including the encrypted and updated symmetric key, to at least one of the first guest virtual machine or the second guest virtual machine at a second time after the first time.

Meanwhile, in order to transmit identical data to the first guest virtual machine and the second guest virtual machine, the server virtual machine may be configured to store data to be transmitted in the shared memory, and to transmit the security key to the first guest virtual machine and the second guest virtual machine.

Meanwhile, the first guest virtual machine and the second guest virtual machine are configured to receive the identical data stored in the shared memory, and to decrypt the received identical data based on the security key.

Meanwhile, in response to integrity of the server virtual machine and the first guest virtual machine being verified by a verifier executed in the hypervisor, the server virtual machine may be configured to store data to be transmitted to the first guest virtual machine in the shared memory, and to transmit the security key to the first guest virtual machine.

Meanwhile, the server virtual machine and the plurality of guest virtual machines may include respective security interface to decrypt the encrypted data received from the shared memory, or to store the encrypted data in the shared memory.

Meanwhile, the verifier in the hypervisor may be configured to: receive digital signature and hash value of the respective security interfaces in the server virtual machine and the plurality of guest virtual machines, and a public key of an external server; and calculate hash value based on the public key of the server and the digital signature of the respective security interfaces, and compare the calculated hash value with the received hash value to verify integrity of the server virtual machine and the plurality of guest virtual machines.

Meanwhile, in response to integrity of the server virtual machine and the first guest virtual machine being verified by the verifier executed in the hypervisor, and in response to integrity of the second guest virtual machine not being verified by the verifier, the server virtual machine may be configured to store data to be transmitted to the first guest virtual machine in the shared memory, and to transmit the security key to the first guest virtual machine, without transmitting the security key to the second guest virtual machine.

Meanwhile, the server virtual machine may be configured to change data shared with the first guest virtual machine and the second guest virtual machine based on a sharing policy.

Meanwhile, in response to the sharing policy being updated, the server virtual machine may be configured to set data to be shared with the first guest virtual machine and the second guest virtual machine.

Meanwhile, the server virtual machine may be configured to: receive position information data, camera data, or sensing data; and transmit the position information data to the first guest virtual machine and not be transmitted to the second guest virtual machine, by using the shared memory based on the sharing policy.

Meanwhile, in response to the sharing policy being updated, the server virtual machine may be configured to transmit the position information data to the first guest virtual machine and the second guest virtual machine, by using the shared memory based on the sharing policy.

Meanwhile, the signal processing device may further include: a secured storage device configured to store a digital signature and a public key of an external server; and a security executor configured to receive the encrypted data from the server, to decrypt the encrypted data from the server based on the digital signature and the public key of the server, and to transmit the decrypted data to the server virtual machine or at least one of the plurality of guest virtual machines.

Meanwhile, the verifier executed in the hypervisor may be configured to: access the secured storage device and receive the digital signature and hash value of the respective security interfaces of the server virtual machine or the plurality of guest virtual machines, and a public key of the server; calculate hash value based on the public key of the server and the digital signature of the respective security interfaces of the virtual machines; and compare the calculated hash value with the received hash value to verify integrity of the server virtual machine and the plurality of guest virtual machines.

Meanwhile, the signal processing device may further include: a secured storage device configured to store a digital signature and a public key of an external server; and a security executor configured to receive encrypted data from the server, to decrypt the encrypted data from the server based on the digital signature and the public key of the server, and to transmit the decrypted data to the server virtual machine, wherein the server virtual machine may be configured to encrypt the decrypted data received from the server, to store the encrypted data in the shared memory, and to transmit a security key to at least one of the first guest virtual machine or the second guest virtual machine.

Meanwhile, only the server virtual machine among the server virtual machine, the first guest virtual machine, and the second guest virtual machine may be configured to receive external input data and communication data.

In accordance with another aspect of the present disclosure, there is provided a signal processing device including: a shared memory; and a processor configured to perform signal processing for display mounted in a vehicle, and to execute a server virtual machine and a plurality of guest virtual machines on a hypervisor; a secured storage device configured to store a digital signature and a public key of an external server; and a security executor configured to receive encrypted data from the server, to decrypt the encrypted data from the server based on the digital signature and the public key of the server, and to transmit the decrypted data to the server virtual machine, wherein the server virtual machine is configured to encrypt the decrypted data received from the server, to store the encrypted data in the shared memory, and to transmit a security key to at least one of the first guest virtual machine or the second guest virtual machine.

Meanwhile, at least one of the first guest virtual machine or the second guest virtual machine may be configured to receive the data stored in the shared memory, and to decrypt the received data based on the security key.

Meanwhile, in response to integrity of the server virtual machine, the first guest virtual machine, and the second guest virtual machine being verified by a verifier executed in the hypervisor, the server virtual machine may be configured to encrypt the decrypted data received from the server, to store the encrypted data in the shared memory, and to transmit the security key to the first guest virtual machine and the second guest virtual machine.

In accordance with yet another aspect of the present disclosure, there is provided a vehicle display apparatus including: a first display; a second display; and a signal processing device including a processor configured to perform signal processing for the first display and the second display, wherein a server virtual machine executed in the signal processing device is configured to store data to be transmitted to at least one of a first guest virtual machine or a second guest virtual machine in a shared memory, and to transmit a security key to at least one of the first guest virtual machine or the second guest virtual machine.

In accordance with further another aspect of the present disclosure, there is provided a vehicle display apparatus including: a first display; a second display; and a signal processing device including a processor configured to perform signal processing for the first display and the second display, wherein a server virtual machine executed in the signal processing device is configured to encrypt decrypted data received from the server, to store the encrypted data in a shared memory, and to transmit a security key to at least one of a first guest virtual machine and a second guest virtual machine.

### EFFECTS OF THE DISCLOSURE

A signal processing device according to an embodiment of the present disclosure includes: a shared memory; and a processor configured to perform signal processing for display mounted in a vehicle, wherein the processor is configured to execute a server virtual machine and a plurality of guest virtual machines on a hypervisor in the processor, wherein a first guest virtual machine of the plurality of guest virtual machines is configured to operate for a first display, and a second guest virtual machine of the plurality of guest virtual machines is configured to operate for a second display, wherein the server virtual machine is configured to store data to be transmitted to at least one of the first guest virtual machine or the second guest virtual machine in the shared memory, and to transmit a security key to at least one of the first guest virtual machine or the second guest virtual machine. Accordingly, it is possible to increase security during data transmission. Particularly, it is possible to increase security during data transmission to the guest virtual machines. Further, it is possible to increase security during data transmission between the virtual machines.

Meanwhile, at least one of the first guest virtual machine or the second guest virtual machine may be configured to receive the data stored in the shared memory, and to decrypt the received data based on the security key. Accordingly, it is possible to increase security during data transmission.

Meanwhile, the server virtual machine may be configured to store data to be transmitted to at least one of the first guest virtual machine or the second guest virtual machine in the shared memory, to encrypt a symmetric key, and to transmit a security key including the encrypted symmetric key to at least one of the first guest virtual machine or the second guest virtual machine. Accordingly, it is possible to increase security during data transmission.

Meanwhile, the symmetric key may be updated, wherein the server virtual machine may be configured to transmit the security key including the encrypted symmetric key to at least one of the first guest virtual machine or the second guest virtual machine at a first time, and to transmit the security key, including the encrypted and updated symmetric key, to at least one of the first guest virtual machine or the second guest virtual machine at a second time after the first time. Accordingly, it is possible to increase security during data transmission based on the updated security key.

Meanwhile, in order to transmit identical data to the first guest virtual machine and the second guest virtual machine, the server virtual machine may be configured to store data to be transmitted in the shared memory, and to transmit the security key to the first guest virtual machine and the second guest virtual machine. Accordingly, while transmitting identical data, it is possible to increase security during transmission of the identical data.

Meanwhile, the first guest virtual machine and the second guest virtual machine are configured to receive the identical data stored in the shared memory, and to decrypt the received identical data based on the security key. Accordingly, while transmitting identical data, it is possible to increase security during transmission of the identical data.

Meanwhile, in response to integrity of the server virtual machine and the first guest virtual machine being verified by a verifier executed in the hypervisor, the server virtual machine may be configured to store data to be transmitted to the first guest virtual machine in the shared memory, and to transmit the security key to the first guest virtual machine. Accordingly, it is possible to increase security during data transmission to virtual machines whose integrity is verified.

Meanwhile, the server virtual machine and the plurality of guest virtual machines may include respective security interface to decrypt the encrypted data received from the shared memory, or to store the encrypted data in the shared memory. Accordingly, it is possible to increase security during data transmission.

Meanwhile, the verifier in the hypervisor may be configured to: receive digital signature and hash value of the respective security interfaces in the server virtual machine and the plurality of guest virtual machines, and a public key of an external server; and calculate hash value based on the public key of the server and the digital signature of the respective security interfaces, and compare the calculated hash value with the received hash value to verify integrity of the server virtual machine and the plurality of guest virtual machines. Accordingly, it is possible to increase security during data transmission to virtual machines whose integrity is verified.

Meanwhile, in response to integrity of the server virtual machine and the first guest virtual machine being verified by the verifier executed in the hypervisor, and in response to integrity of the second guest virtual machine not being verified by the verifier, the server virtual machine may be configured to store data to be transmitted to the first guest virtual machine in the shared memory, and to transmit the security key to the first guest virtual machine, without transmitting the security key to the second guest virtual machine. Accordingly, it is possible to increase security during data transmission to virtual machines whose integrity is verified.

Meanwhile, the server virtual machine may be configured to change data shared with the first guest virtual machine and the second guest virtual machine based on a sharing policy. Accordingly, based on the sharing policy, it is possible to differentiate data to be transmitted.

Meanwhile, in response to the sharing policy being updated, the server virtual machine may be configured to set data to be shared with the first guest virtual machine and the second guest virtual machine. Accordingly, data to be transmitted may be set up based on the updating of the sharing policy.

Meanwhile, the server virtual machine may be configured to: receive position information data, camera data, or sensing data; and transmit the position information data to the first guest virtual machine and not be transmitted to the second guest virtual machine, by using the shared memory based on the sharing policy. Accordingly, based on the sharing policy, it is possible to differentiate data to be transmitted.

Meanwhile, in response to the sharing policy being updated, the server virtual machine may be configured to transmit the position information data to the first guest virtual machine and the second guest virtual machine, by using the shared memory based on the sharing policy. Accordingly, data to be transmitted may be set up based on the updating of the sharing policy.

Meanwhile, the signal processing device may further include: a secured storage device configured to store a digital signature and a public key of an external server; and a security executor configured to receive the encrypted data from the server, to decrypt the encrypted data from the server based on the digital signature and the public key of the server, and to transmit the decrypted data to the server virtual machine or at least one of the plurality of guest virtual machines. Accordingly, while increasing security when data is received from the external server, data may be transmitted to internal virtual machines.

Meanwhile, the verifier executed in the hypervisor may be configured to: access the secured storage device and receive the digital signature and hash value of the respective security interfaces of the server virtual machine or the plurality of guest virtual machines, and a public key of the server; calculate hash value based on the public key of the server and the digital signature of the respective security interfaces of the virtual machines; and compare the calculated hash value with the received hash value to verify integrity of the server virtual machine and the plurality of guest virtual machines. Accordingly, while increasing security when data is received from the external server, data may be transmitted to internal virtual machines.

Meanwhile, the signal processing device may further include: a secured storage device configured to store a digital signature and a public key of an external server; and a security executor configured to receive encrypted data from the server, to decrypt the encrypted data from the server based on the digital signature and the public key of the server, and to transmit the decrypted data to the server virtual machine, wherein the server virtual machine may be configured to encrypt the decrypted data received from the server, to store the encrypted data in the shared memory, and to transmit a security key to at least one of the first guest virtual machine or the second guest virtual machine. Accordingly, while increasing security when data is received from the external server, data may be transmitted to internal virtual machines.

Meanwhile, only the server virtual machine among the server virtual machine, the first guest virtual machine, and the second guest virtual machine may be configured to receive external input data and communication data. Accordingly, an interface for the external input data and the communication data may be implemented efficiently.

In accordance with another aspect of the present disclosure, there is provided a signal processing device including: a shared memory; and a processor configured to perform signal processing for display mounted in a vehicle, and to execute a server virtual machine and a plurality of guest virtual machines on a hypervisor; a secured storage device configured to store a digital signature and a public key of an external server; and a security executor configured to receive encrypted data from the server, to decrypt the encrypted data from the server based on the digital signature and the public key of the server, and to transmit the decrypted data to the server virtual machine, wherein the server virtual machine is configured to encrypt the decrypted data received from the server, to store the encrypted data in the shared memory, and to transmit a security key to at least one of the first guest virtual machine or the second guest virtual machine. Accordingly, it is possible to increase security during data transmission between the virtual machines.

Meanwhile, at least one of the first guest virtual machine or the second guest virtual machine may be configured to receive the data stored in the shared memory, and to decrypt the received data based on the security key. Accordingly, it is possible to increase security during data transmission.

Meanwhile, in response to integrity of the server virtual machine, the first guest virtual machine, and the second guest virtual machine being verified by a verifier executed in the hypervisor, the server virtual machine may be configured to encrypt the decrypted data received from the server, to store the encrypted data in the shared memory, and to transmit the security key to the first guest virtual machine and the second guest virtual machine. Accordingly, it is possible to increase security during data transmission.

In accordance with yet another aspect of the present disclosure, there is provided a vehicle display apparatus including: a first display; a second display; and a signal processing device including a processor configured to perform signal processing for the first display and the second display, wherein a server virtual machine executed in the signal processing device is configured to store data to be transmitted to at least one of a first guest virtual machine or a second guest virtual machine in a shared memory, and to transmit a security key to at least one of the first guest virtual machine or the second guest virtual machine. Accordingly, it is possible to increase security during data transmission. Particularly, it is possible to increase security during data transmission to the guest virtual machines. Further, it is possible to increase security during data transmission between the virtual machines.

In accordance with further another aspect of the present disclosure, there is provided a vehicle display apparatus including: a first display; a second display; and a signal processing device including a processor configured to perform signal processing for the first display and the second display, wherein a server virtual machine executed in the signal processing device is configured to encrypt decrypted data received from the server, to store the encrypted data in a shared memory, and to transmit a security key to at least one of a first guest virtual machine and a second guest virtual machine. Accordingly, while increasing security when data is received from the external server, it is possible to increase security during data transmission between the virtual machines.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view referred to in the description of operation of the system driven in the signal processing device according to the embodiment of the present disclosure;
FIGS. 7A to 9D are diagrams referred to in the description of FIG. 5 or FIG. 6;
FIG. 10 is a diagram illustrating in detail the system running on the signal processing device of FIG. 5; and
FIGS. 11A to 13 are diagrams referred to in the description of FIG. 10.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

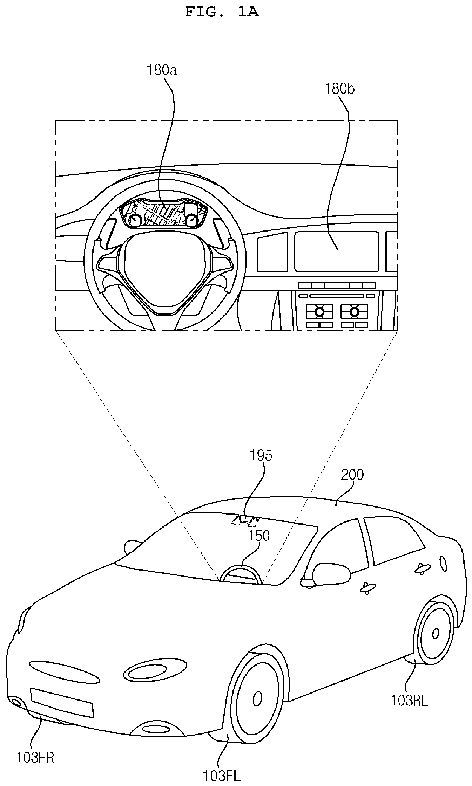

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

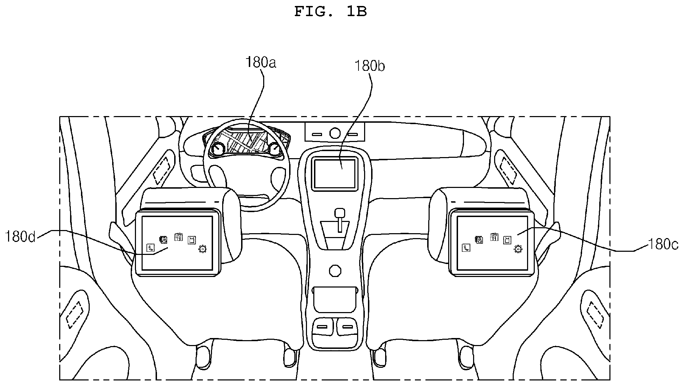

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be mounted in the vehicle.

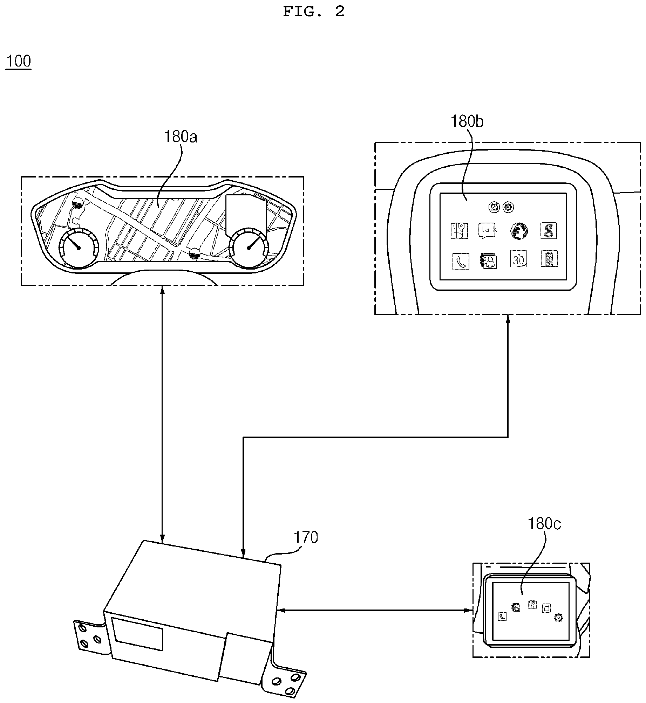

FIG. 2 is a view showing the external appearance of a display apparatus for vehicles according to an embodiment of the present disclosure.

A display apparatus 100 for vehicles (hereinafter referred to as a vehicle display apparatus) according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may include a shared memory 508 and a processor 175, and may execute first to third virtual machines 520 to 540 on a hypervisor 505 in the processor 175.

The first virtual machine 520, which is a server virtual machine, may control a second virtual machine 530 and a third virtual machine 50 which are guest virtual machines.

Meanwhile, the second virtual machine may be referred to as a first guest virtual machine, and the third virtual machine may be referred to as a second guest virtual machine.

The first guest virtual machine 530 may operate for the first display 180a, and the second guest virtual machine 540 may operate for the second display 180b.

Meanwhile, the server virtual machine 520 in the processor 715 may be configured to set up the shared memory 508 based on the hypervisor 505 for transmission of identical data to the first guest virtual machine 530 and the second guest virtual machine 540. Accordingly, the first display 180a and the second display 180b in a vehicle may display identical information or identical images in a synchronized manner.

Meanwhile, the server virtual machine 520 in the processor 175 may receive and process wheel speed sensor data of the vehicle, and may transmit the processed wheel speed sensor data to at least one of the first guest virtual machine 530 or the second guest virtual machine 540. Accordingly, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a third virtual machine (not shown), in addition to the server virtual machine 520 and the plurality of guest virtual machines 530 and 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

The signal processing device 170 according to the embodiment of the present disclosure may be configured to operate displays 180a to 180c under various operating systems also display identical information or identical images in a synchronized state.

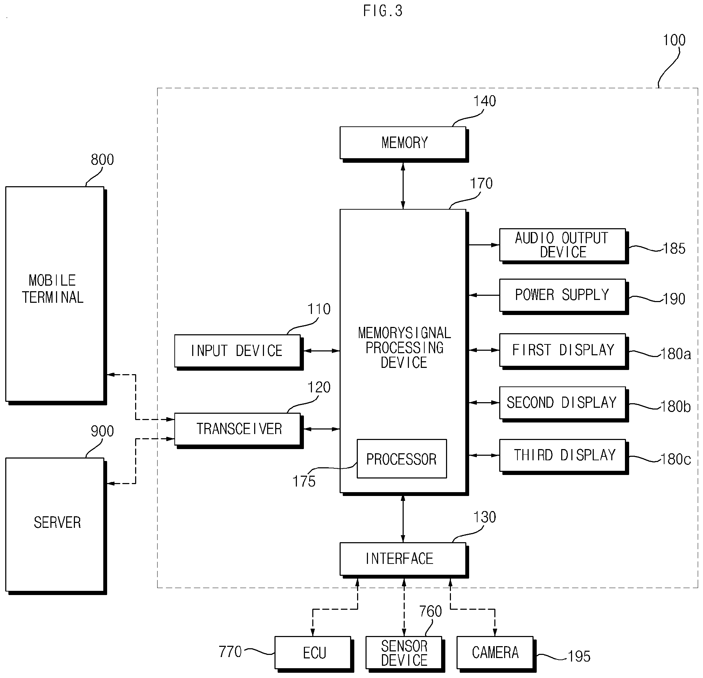

FIG. 3 illustrates an example of an internal block diagram of the display apparatus for vehicles according to the embodiment of the present disclosure.

Referring to the figure, the display apparatus 100 for vehicles according to the embodiment of the present disclosure may include an input device 110, a transceiver 120, an interface 130, a memory 140, a signal processing device 170, a plurality of displays 180a to 180c, an audio output device 185, and a power supply 190.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 750, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor, the server virtual machine 520, and the plurality of guest virtual machines which are to be executed in the processor 175.

The audio output device 185 may convert an electrical signal from the signal processing device 170 into an audio signal, and may output the audio signal. To this end, the audio output device 185 may include a speaker and the like.

The power supply 190 may supply power necessary to operate components under control of the signal processing device 170. In particular, the power supply 190 may receive power from a battery in the vehicle.

The signal processing device 170 may control the overall operation of each unit in the vehicle display apparatus 100.

For example, the signal processing device 170 may include the shared memory 508 and the processor 175 configured to perform signal processing for the displays 180a and 180b.

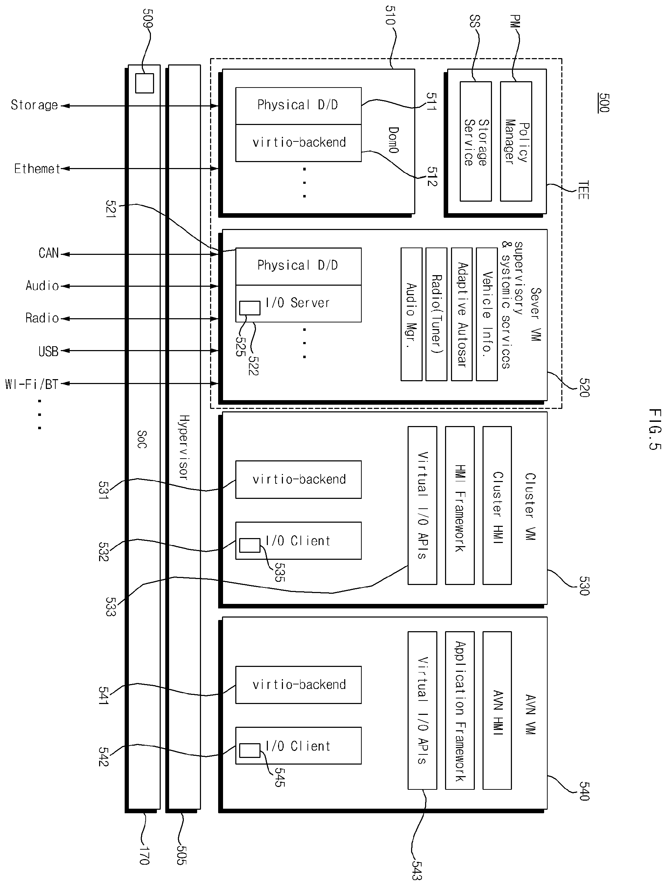

The processor 175 may execute the hypervisor 505 (see FIG. 5), and may execute the server virtual machine 520 and the plurality of guest virtual machines 530 and 540 on the hypervisor 505 that runs (see FIG. 5).

In this case, the first guest virtual machine 530 may operate for the first display 180a, and the second guest virtual machine 540 may operate for the second display 180b.

For example, the server virtual machine 520 in the processor 715 may receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

In another example, the server virtual machine 520 may directly receive and process CAN communication data, audio data, radio data, USB data, and wireless communication data for the first and second guest virtual machines 530 and 540.

Further, the server virtual machine 520 may transmit the processed data to the first and second guest virtual machines 530 and 540.

Accordingly, among the server virtual machine 520 and the plurality of guest virtual machines 530 and 540, only the server virtual machine 520 may receive communication data and external input data and may perform signal processing, whereby load in signal processing by the other virtual machines may be reduced and 1:N data communication may be achieved, and therefore synchronization at the time of data sharing may be achieved.

Meanwhile, the server virtual machine 520 may be configured to write data in the shared memory 508, whereby the first guest virtual machine 530 and the second guest virtual machine 540 share identical data.

For example, the server virtual machine 520 may be configured to write vehicle sensor data, the position information data, the camera image data, or the touch input data in the shared memory 508, whereby the first guest virtual machine 530 and the second guest virtual machine 540 share identical data. Accordingly, 1:N data sharing may be achieved.

As a result, the server virtual machine 520 may process most of the data, thereby allowing 1:N data sharing.

Meanwhile, the server virtual machine 520 in the processor 175 may be configured to set up the shared memory 508 based on the hypervisor 505 for transmission of identical data to the first guest virtual machine 530 and the second guest virtual machine 540.

That is, the server virtual machine 520 in the processor 175 may transmit identical data to the first guest virtual machine 530 and the second guest virtual machine 540 in a synchronized manner by using the shared memory 508 based on the hypervisor 505. Accordingly, the plurality of displays 180a and 180b in the vehicle may display identical images in a synchronized manner.

Meanwhile, the signal processing device 170 may process various signals, such as an audio signal, an image signal, and a data signal. To this end, the signal processing device 170 may be implemented in the form of a system on chip (SOC).

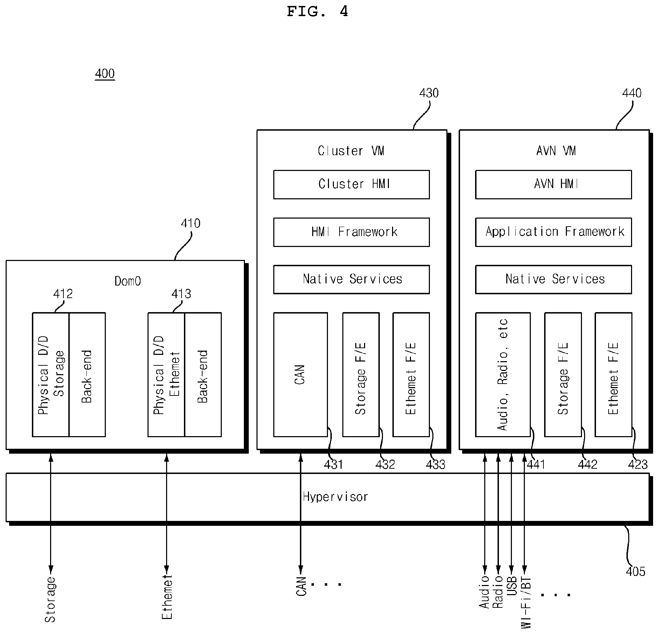

FIG. 4 is a view showing a system driven in a signal processing device related to the present disclosure.

Referring to the figure, FIG. 4 is a view illustrating that virtual machines are used for the cluster display 180a and the AVN display 180b.

The system 400 driven in the signal processing device of FIG. 4 illustrates that a cluster virtual machine 430 and an AVN virtual machine 440 are executed through a hypervisor 405 in the processor 175.

Meanwhile, the system 400 driven in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

FIG. 5 is a view showing an example of a system running on a signal processing device according to an embodiment of the present disclosure.

Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

The first guest virtual machine 530 may be a virtual machine for the cluster display 180a, and the second guest virtual machine 540 may be a virtual machine for the AVN display 180b.

That is, the first guest virtual machine 530 and the second guest virtual machine 540 may be operated for image rendering of the cluster display 180a and the AVN display 180b, respectively.

Meanwhile, it is also illustrated that in the system 500 running on the signal processing device 170 of FIG. 5, a legacy virtual machine 510 is also executed on the hypervisor 505 in the processor 175.

The legacy virtual machine 510 may include an interface 511 for data communication and Ethernet communication with the memory 140.

Meanwhile, the legacy virtual machine 510 may further include a virtio-backend interface 512 for data communication with the first and second guest virtual machines 530 and 540.

The server virtual machine 520 may include an interface 521 for input and output of audio data, radio data, USB data, and wireless communication data, and an input and output server interface 522 for data communication with the guest virtual machines.

That is, the server virtual machine 520, which is a server virtual machine, may provide inputs/outputs (I/O) difficult to virtualize with standard virtualization technology (VirtIO) to a plurality of guest virtual machines, e.g., the first and second guest virtual machines 530 and 540.

Meanwhile, the server virtual machine 520, which is a server virtual machine, may control radio data and audio data at a supervisor level, and may provide the data to a plurality of guest virtual machines, e.g., the first and second guest virtual machines 530 and 540, and the like.

Meanwhile, the server virtual machine 520, which is a server virtual machine, may process vehicle data, sensor data, and surroundings-of-vehicle information, and may provide the processed data or information to a plurality of guest virtual machines, e.g., the first and second guest virtual machines 530 and 540, and the like.

Meanwhile, the server virtual machine 520 may provide supervisory services, such as processing of vehicle data and audio routing management, and the like.

Next, the first guest virtual machine 530 may include an input and output client interface 532 for data communication with the server virtual machine 520 and APIs 533 configured to control the input and output client interface 532.

In addition, the first guest virtual machine 530 may include a virtio-backend interface for data communication with the legacy virtual machine 510.

The first guest virtual machine 530 may receive memory data by communication with the memory 140 and Ethernet data by Ethernet communication from the virtio-backend interface 512 of the legacy virtual machine 510 through the virtio-backend interface.

Next, the second guest virtual machine 540 may include an input and output client interface 542 for data communication with the server virtual machine 520 and APIs 543 configured to control the input and output client interface 542.

In addition, the second guest virtual machine 540 may include a virtio-backend interface for data communication with the legacy virtual machine 510.

The second guest virtual machine 540 may receive memory data by communication with the memory 140 and Ethernet data by Ethernet communication from the virtio-backend interface 512 of the legacy virtual machine 510 through the virtio-backend interface.

Meanwhile, unlike FIG. 5, the legacy virtual machine 510 may be provided in the server virtual machine 520.

In the system 500, CAN communication data, such as sensing data, are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Also, in the system 500 of FIG. 5, audio data, radio data, USB data, and wireless communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

Meanwhile, in the system 500 of FIG. 5, the first and second guest virtual machines 530 and 540 may operate on different operating systems.

For example, the first guest virtual machine 540 may operate on Linux OS, and the second guest virtual machine 540 may operate on a Web-based OS.

In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may display identical data or identical images in a synchronized manner.

Meanwhile, in addition to the shared memory 508 and the processor 175, the signal processing device 170 may further include a secured storage device 509 configured to store an electronic or digital signature and a public key of an external server 900.

Meanwhile, the signal processing device 170 may further include a security executor TEE configured to receive an encrypted data from the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, as illustrated in the drawing, the security executor TEE may also be executed by the processor 175 in the signal processing device 170.

The security executor TEE may include a policy manager PM configured to set data so that data, shared with the first guest virtual machine 530 and the second guest virtual machine 540, may change based on a sharing policy, and an interface SS configured to exchange data with the secured storage device 509.

Meanwhile, the server virtual machine 520 and the first and second guest virtual machines 530 and 540 may include security interfaces 525, 535, and 545, respectively, which are configured to decrypt the encrypted data received from the shared memory 508 or to store the encrypted data in the shared memory 508.

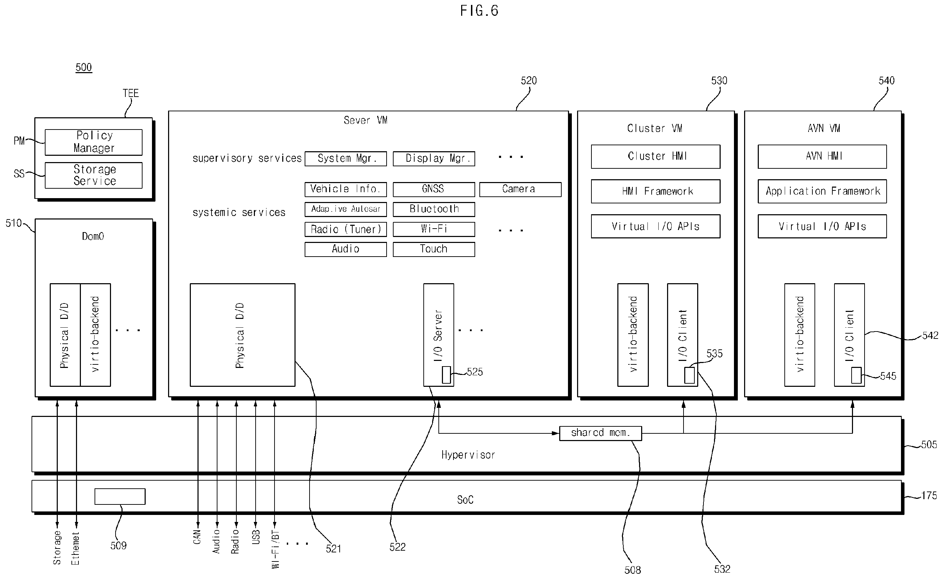

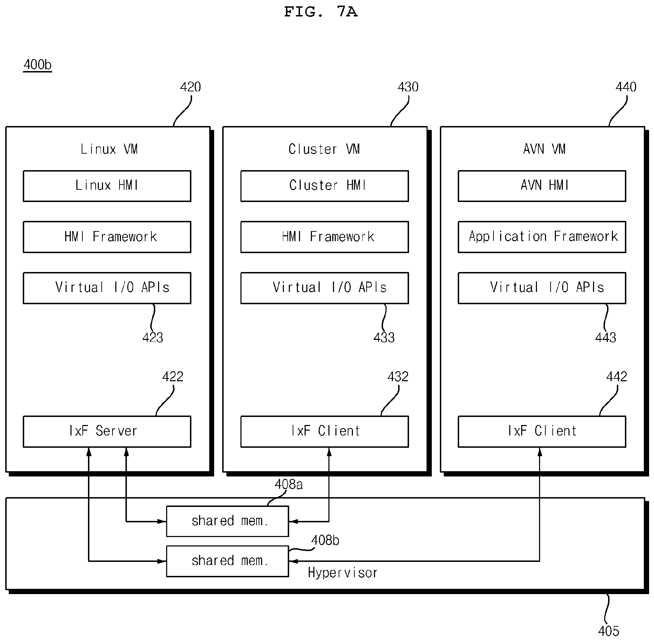

FIG. 6 is a diagram referred to in the description of operation of a system running on a signal processing device according to the embodiment of the present disclosure, and FIGS. 7A to 9D are diagrams referred to in the description of FIG. 5 or FIG. 6.

First, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may be configured to set up the shared memory 508 based on the hypervisor 505 for data transmission to the first and second guest virtual machines 530 and 540.

For example, as an example of identical data, identical image data may be transmitted from the server virtual machine 520 to the first guest virtual machine 530 and the second guest virtual machine 540. Accordingly, the plurality of displays 180a and 180b in the vehicle may display identical images in a synchronized manner.

Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may transmit identical data to the first and second guest virtual machines 530 and 540 in a synchronized manner by using the shared memory 508 based on the hypervisor 505.

For example, examples of identical data may include CAN communication data, audio data, radio data, USB data, wireless communication data, position information data, or touch data, and the like. Accordingly, the plurality of displays 180a and 180b in the vehicle may display identical data in a synchronized manner.

Meanwhile, the server virtual machine 520 in the processor 175 may receive and process position information data that changes according to movement, and may provide the processed data to the first guest virtual machine 530 or the second guest virtual machine 540. Accordingly, instead of 1:1 data communication, 1:N data communication between the virtual machines may be achieved by using the shared memory.

Meanwhile, the first guest virtual machine 530 and the second guest virtual machine 540 may be driven by different operating systems. Accordingly, even when the plurality of virtual machines are driven by different operating systems, high-speed data communication may be performed.

Meanwhile, although not illustrated in FIG. 6, the legacy virtual machine 510 may transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data may be performed. Accordingly, identical data may be transmitted in a synchronized manner.

Meanwhile, the server virtual machine 520 in the processor 175 may execute supervisory services, such as a system manager, a display manager, and the like.

Meanwhile, the server virtual machine 520 in the processor 175 may execute systemic services, such as vehicle information service, position information service, camera service, AUTOSAR, Bluetooth communication service, radio service, Wi-Fi service, audio service, touch service, and the like.

Meanwhile, similarly to FIG. 5, the signal processing device 170 may further include the secured storage device 509 configured to store a digital signature and a public key of the external server 900, in addition to the shared memory 508 and the processor 175.

Meanwhile, the signal processing device 170 may further include a security executor TEE configured to receive an encrypted data from the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, as illustrated in the drawing, the security executor TEE may also be executed by the processor 175 in the signal processing device 170.

The security executor TEE may include a policy manager PM configured to set data so that data, shared with the first guest virtual machine 530 and the second guest virtual machine 540, may change based on a sharing policy, and an interface SS configured to exchange data with the secured storage device 509.

Meanwhile, the server virtual machine 520 and the first and second guest virtual machines 530 and 540 may include security interfaces 525, 535, and 545, respectively, which are configured to decrypt the encrypted data received from the shared memory 508 or to store the encrypted data in the shared memory 508.

FIG. 7A is a diagram illustrating an example of three virtual machines 420, 420, and 430 operating on a system 400b of FIG. 4.

Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

If a separate shared memory is used for transmitting the same first data as illustrated in FIG. 7A, there is a drawback in that resources are wasted and synchronization is not easy.

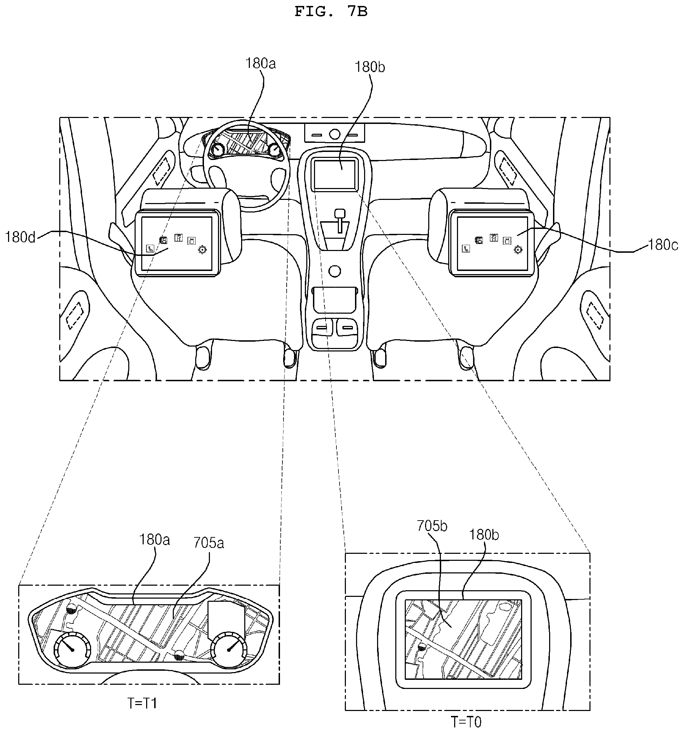

FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

As described above, if the first virtual machine 520 and 420 transmits identical image data by using the separate shared memory as illustrated in FIG. 7A, there is a drawback in that images may not be displayed in a synchronized manner as illustrated in FIG. 7B.

In order to solve this problem, the present disclosure proposes a scheme for allocating a single shared memory at the time of transmission of identical data. Consequently, 1:N data communication is performed, whereby synchronized data transmission is achieved.

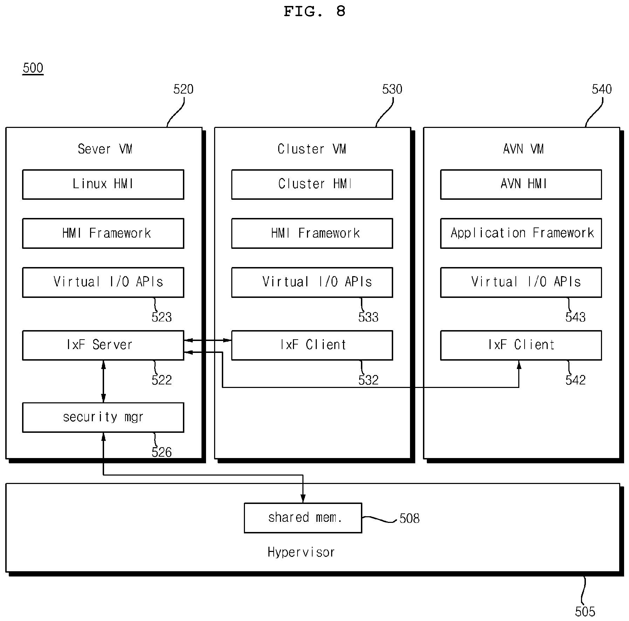

FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

Accordingly, the plurality of displays 180a and 180b in the vehicle may display identical images in a synchronized manner.

Meanwhile, high-speed data communication may be performed among the plurality of virtual machines 520, 530, and 540. Further, high-speed data communication may be performed even when the plurality of virtual machines 520, 530, and 540 are driven by different operating systems.

Meanwhile, the server virtual machine 520 in the processor 175 may transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines may be achieved by using the shared memory 508.

Meanwhile, the server virtual machine 520 in the processor 175 may include the input and output server interface 522 and a security manager 526.

Meanwhile, the first guest virtual machine 530 and the second guest virtual machine 540 may include input and output client interfaces 532 and 542, respectively. Accordingly, high-speed data communication between the plurality of virtual machines may be performed by using the input and output server interface 522 and the input and output client interfaces 532 and 542.

The input and output server interface 522 in the first virtual machine 520 may receive requests for transmission of identical data from the respective input and output client interfaces 532 and 542 in the first guest virtual machine 530 and the second guest virtual machine 540, and may transmit shared data to the shared memory 508 through the security manager 526 based thereon.

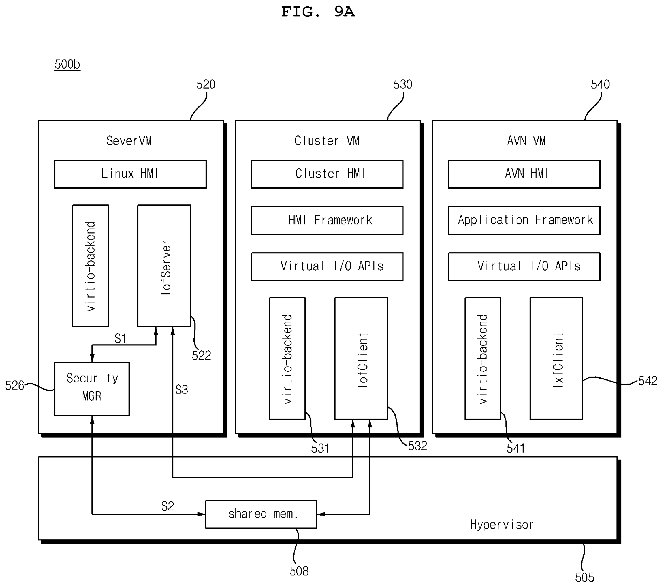

FIG. 9A is a diagram illustrating in further detail transmission of shared data.

Referring to the figure, in order to transmit shared data, the input and output server interface 522 in the server virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, after allocation of the shared memory 508, the input and output server interface 522 transmits information regarding the shared memory 508 including key data to the input and output client interfaces 532 and 542 (S4). In this case, the key data may be data for data access.

That is, after setting up the shared memory 508, the server virtual machine 520 in the processor 175 may transmit information regarding the shared memory 508 to the first guest virtual machine 530 and the second guest virtual machine 540.

The input and output client interfaces 532 and 542 may access the shared memory 508 based on the received key data (S5), and may copy the shared data from the shared memory 508.

Accordingly, the first guest virtual machine 530 and the second guest virtual machine 540 may access the shared memory 508, and thus, may share the shared data.

For example, in the case in which the shared data are image data, the first guest virtual machine 530 and the second guest virtual machine 540 may share the image data, and thus, the plurality of displays 180a and 180b in the vehicle may display the same shared image in a synchronized manner.

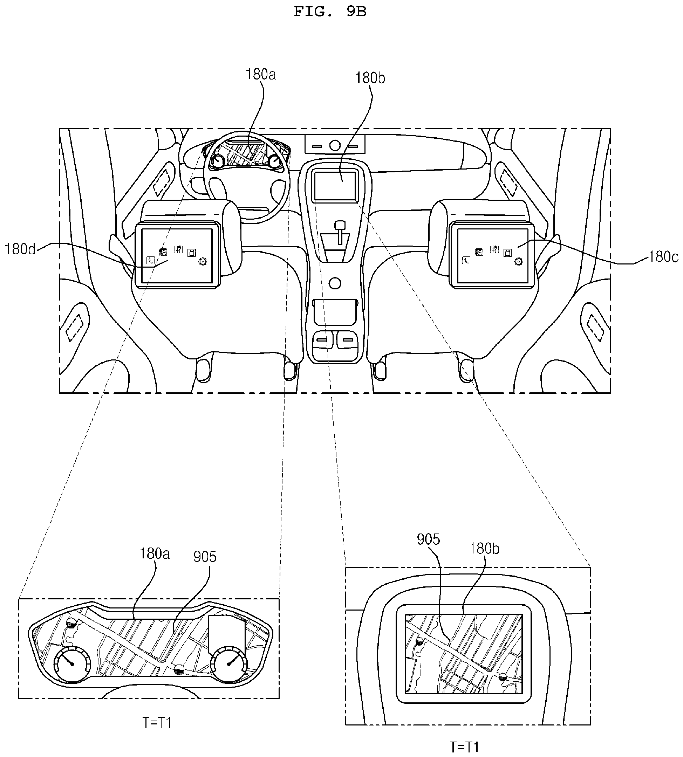

FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

FIG. 9B illustrates that an image 905 displayed on the first display 180a and an image 905 displayed on the second display 180b are synchronized, such that the same image may be displayed.

That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may display the same images in a synchronized manner. Further, high-speed data communication among the plurality of virtual machines 520, 530, and 540 may be performed.

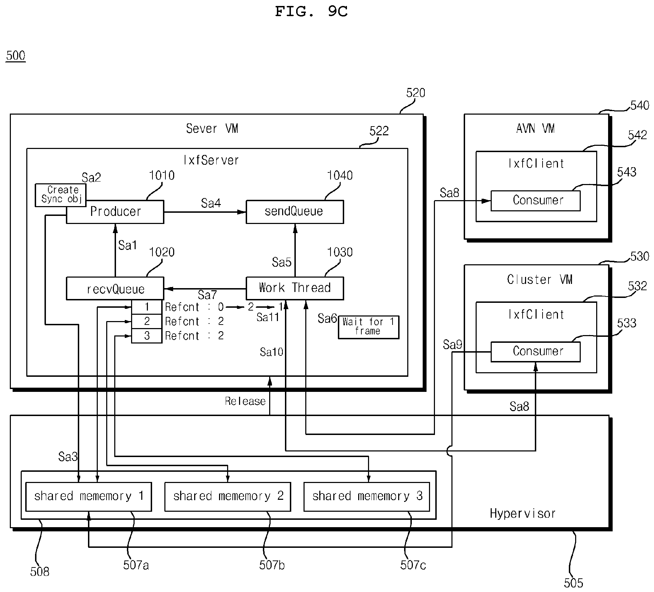

FIG. 9C is a diagram illustrating in detail the input and output server interface 522 of FIG. 8.

Referring to the figure, a plurality of buffers 507a, 507b, and 507c may be set up in the shared memory 508.

Meanwhile, the input and output client interfaces 532 and 542 in the first guest virtual machine 530 and the second guest virtual machine 540 may include consumers 533 and 543, respectively.

Meanwhile, the input and output server interface 522 in the server virtual machine 520 may include a producer 1010 configured to create a synchronization object for graphical synchronization, a recvQueue 1020 configured to manage, particularly receive, a queue, a WorkThread 1030 configured to manage a queue and to control operation of the queue, and a sendQueue 1040 configured to manage, particularly transmit, a queue.

First, the producer 1010 receives information regarding the index of an empty index, among the plurality of buffers 507a, 507b, and 507c in the shared memory 508, from the recvQueue 1020 (Sa1). For example, in the case in which the first buffer 507a, among the plurality of buffers 507a, 507b, and 507c, is empty, information regarding the first buffer 507a is received (Sal).

In particular, the producer 1010 may receive information regarding the first buffer 507a having a reference count refcnt of 0 from the recvQueue 1020.

Next, the producer 1010 creates a synchronization object for graphical synchronization in order to perform writing in the first buffer 507a (Sa2).

Next, the producer 1010 writes data about the created synchronization object in the first buffer 507a in the shared memory 508 (Sa3).

Next, the producer 1010 queues information regarding the first buffer 507a, i.e. a buffer index, to the sendQueue 1040 (Sa4) .

Next, in the case in which data are input to the sendQueue 1040, which is periodically monitored, the WorkThread 1030 senses and receives or reads the data (Sa5).

For example, in the case in which information regarding the first buffer 507a is input to the sendQueue 1040, which is monitored, the WorkThread 1030 receives the information.

Meanwhile, the WorkThread 1030 waits until a frame about the created synchronization object is completely drawn (Sa6).

Next, the WorkThread 1030 increases the reference count refcnt of the buffer corresponding to the first buffer 507a by the number of consumers or the number of input and output client interfaces (Sa7).

For example, since the number of consumers 533 and 543 or the number of input and output client interfaces 532 and 542 is two in the figure, the reference count refcnt of the buffer corresponding to the first buffer 507a is increased from 0 to 2.

Next, the WorkThread 1030 transmits the buffer index to the consumers 533 and 543 (Sa8). For example, information corresponding to the first buffer 507a is transmitted (Sa8).

Next, the consumers 533 and 543 access the first buffer 507a in the shared memory 508 using the received buffer index to copy data (Sa9).

Next, the consumers 533 and 543 return the buffer index to the producer 1010 or the WorkThread 1030 after completion of data copying (Sa10).

Next, the producer 1010 reduces the reference count refcnt of the first buffer 507a by 1 based on information or a buffer index received after completion of data copying for each of the consumers 533 and 543.

For example, in the case in which the first consumer 533 completes data copying, the reference count refcnt of the first buffer 507a is reduced from 2 to 1.

Subsequently, in the case in which the second consumer 543 completes data copying, the reference count refcnt of the first buffer 507a is reduced from 1 to 0.

Meanwhile, in the case in which the reference count refcnt of the first buffer 507a is 0, the buffer may be used by the producer 1010.

Similarly, first frame data may be shared using the first buffer 507a, then second frame data may be shared using the second buffer 507b, then third frame data may be shared using the third buffer 507c, and then fourth frame data may be shared using the first buffer 507a again.

That is, the input and output server interface 522 may receive information regarding the empty first buffer 507a in the shared memory 508, may write the first data in the first buffer 507a in the shared memory 508, and may transmit buffer information of the first buffer 507a to the input and output client interfaces 532 and 542 in the first guest virtual machine 530 and the second guest virtual machine 540.

In particular, the reference count of the first buffer 507a may be changed in a first direction (e.g. the reference count being increased) based on writing of the first data in the first buffer 507a, and in case in which copying of the first data to the first buffer 507a is completed, the reference count of the first buffer 507a may be changed in a second direction, which is opposite the first direction, (e.g. the reference count being decreased).

For example, the consumers 533 and 543 in the respective input and output client interfaces 532 and 542 in the first guest virtual machine 530 and the second guest virtual machine 540 may change the reference count of the first buffer 507a in the first direction (e.g. the reference count being increased) based on writing of the first data in the first buffer 507a.

Meanwhile, in case in which copying of the first data to the first buffer 507a is completed, the producer 1010 in the input and output server interface 522 in the server virtual machine 520 may change the reference count of the first buffer 507a in the second direction, which is opposite the first direction, (e.g. the reference count being decreased). Accordingly, after completion of copying, new data may be written in the first buffer 507a.

Meanwhile, the server virtual machine 520 may write first frame data to third frame data in the first buffer 507a to the third buffer 507c, respectively, among the plurality of buffers 507a to 507c, and the respective input and output client interfaces 532 and 542 in the first guest virtual machine 530 and the second guest virtual machine 540 may sequentially copy the first frame data to the third frame data from the first buffer 507a to the third buffer 507c.

Meanwhile, after the input and output client interfaces 532 and 542 in the second guest virtual machine 540 has completed copying the first frame data from the first buffer 507a, the first guest virtual machine 530 may copy the second frame data from the second buffer 507b. Accordingly, synchronization between the first guest virtual machine 530 and the second guest virtual machine 540 may be performed during data sharing.

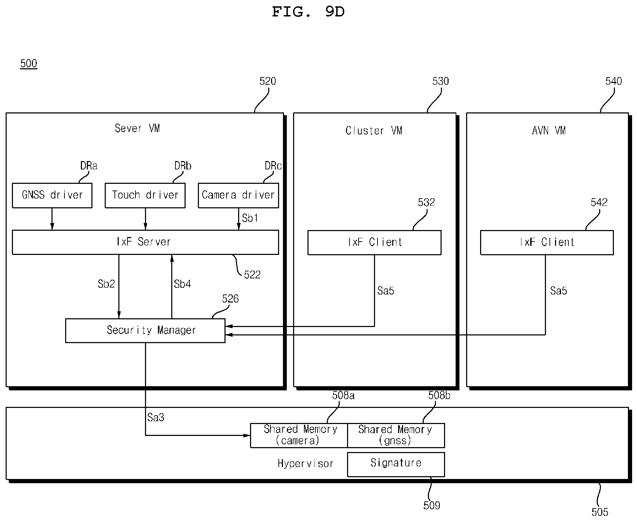

FIG. 9D a diagram illustrating that various drivers DRa, DRb, and DRc are provided in the server virtual machine 520.

Referring to the figure, the server virtual machine 520 may include a position information driver DRa for processing position information, a touch driver DRb for processing touch input, and a camera driver DRc for processing an image from the camera.

Accordingly, the server virtual machine 520 may set up the shared memory 508 based on the hypervisor 505 for each of the position information driver DRa, the touch driver DRb, and the camera driver DRc.

Meanwhile, the input and output server interface 522 may set up a first shared memory 508a for transmission of image data from the camera driver DRc, and may set up a second shared memory 508b for transmission of position information from the position information driver DRa.

Meanwhile, key data of the first shared memory 508a and key data of the second shared memory 508b may be transmitted to the first guest virtual machine 530 and the second guest virtual machine 540, and the first guest virtual machine 530 and the second guest virtual machine 540 may access the first shared memory 508a and the second shared memory 508b based on the key data of the first shared memory 508a and the key data of the second shared memory 508b.

In the figure, an example of sharing data from the position information driver DRa and data from the camera driver DRc is illustrated, such that two shared memories 508a and 508b are illustrated as the shared memory based on the hypervisor 505.

As described above, by setting up the shared memory for each of different types of shared data, it is possible to prevent data confusion during data sharing and to perform high-speed data communication among the plurality of virtual machines 520, 530, and 540.

Meanwhile, when different types of shared data are shared, the security manager 526 may create key data information for data access, and may create and register virtual machine information, information for each piece of equipment, allocated memory address information, buffer index information, and the created key data information in the form of a table.

Meanwhile, the respective input and output client interfaces 532 and 542 in the first guest virtual machine 530 and the second guest virtual machine 540 may be connected to the security manager 526, may request and receive key data by referring to the table in the security manager 526, and may access a corresponding shared memory using the received key data.

Meanwhile, in the case in which data from the camera driver DRc are shared through the first shared memory 508a and in the case in which data from the position information driver DRa are shared through the second shared memory 508b, the virtual machine information in one case and the virtual machine information in the other case are identical to each other, but the information for each piece of equipment, the allocated memory address information, the buffer index information, and the created key data information in one case and the information for each piece of equipment, the allocated memory address information, the buffer index information, and the created key data information in the other case are different from each other. Accordingly, it is possible to prevent data confusion during of sharing of different types of data and to perform high-speed data communication among the plurality of virtual machines 520, 530, and 540.

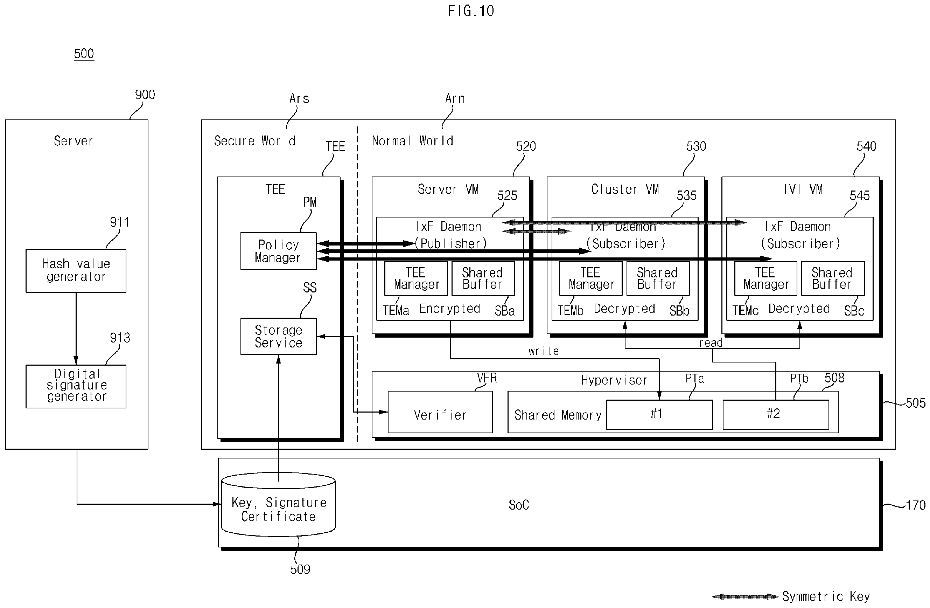

FIG. 10 is a diagram illustrating in detail the system running on the signal processing device of FIG. 5.

Referring to the figure, the signal processing device 170 according to an embodiment of the present disclosure includes the shared memory 508 and the processor 175 configured to perform signal processing for display mounted in a vehicle.

The processor 175 may execute the server virtual machine 520 and the plurality of guest virtual machines 530 and 540 on the hypervisor 505 in the processor 175, in which of the plurality of guest virtual machines 530 and 540, the first guest virtual machine 530 operates for the first display 180a and the second guest virtual machine 540 operates for the second display 180b.

Meanwhile, the server virtual machine 520 according to an embodiment of the present disclosure may be configured to store data to be transmitted to at least one of the first guest virtual machine 530 or the second guest virtual machine 540 in the shared memory 508, and transmits a security key to at least one of the first guest virtual machine 530 or the second guest virtual machine 540. Accordingly, it is possible to increase security during data transmission. Particularly, it is possible to increase security during data transmission to the guest virtual machine 530 or 540. Further, it is possible to increase security during data transmission among the virtual machines 520 to 540.

Meanwhile, at least one of the first guest virtual machine 530 or the second guest virtual machine 540 may receive the data stored in the shared memory 508, and may decrypt the received data based on the security key. Accordingly, it is possible to increase security during data transmission.

Meanwhile, the server virtual machine 520 may be configured to store data to be transmitted to at least one of the first guest virtual machine 530 or the second guest virtual machine 540 in the shared memory 508, may encrypt a symmetric key, and may transmit a security key including the encrypted symmetric key to at least one of the first guest virtual machine 530 or the second guest virtual machine 540. Accordingly, it is possible to increase security during data transmission.

In the drawing, an example is illustrated in which the server virtual machine 520 transmits the security key including the encrypted symmetric key to the first guest virtual machine 530 and the second guest virtual machine 540.

Accordingly, the first guest virtual machine 530 and the second guest virtual machine 540 may receive the encrypted symmetric key and may decrypt the data, stored in the shared memory 508, by using the symmetric key.

Meanwhile, the symmetric key is updated, and the server virtual machine 520 may transmit the security key including the encrypted symmetric key to at least one of the first guest virtual machine 530 or the second guest virtual machine 540 at a first time, and may transmit the security key, including the encrypted and updated symmetric key, to at least one of the first guest virtual machine 530 or the second guest virtual machine 540 at a second time after the first time. Accordingly, it is possible to increase security during data transmission based on the updated security key.

For example, the server virtual machine 520 may generate and update new symmetric keys as random key values at predetermined intervals.

Further, the server virtual machine 520 may transmit the updated symmetric key to the security interface 535 or 545 in at least one of the first guest virtual machine 530 or the second guest virtual machine 540. Accordingly, it is possible to increase security during data transmission based on the updated security key.

Meanwhile, in order to transmit identical data to the first guest virtual machine 530 and the second guest virtual machine 540, the server virtual machine 520 may be configured to store data to be transmitted thereto in the shared memory 508, and may transmit the security key to the first guest virtual machine 530 and the second guest virtual machine 540. Accordingly, while transmitting the identical data, security may increase during transmission of the identical data.

Meanwhile, the first guest virtual machine 530 and the second guest virtual machine 540 may receive the identical data stored in the shared memory 508, and may decrypt the received identical data based on the security key. Accordingly, while transmitting the identical data, security may increase during transmission of the identical data.

Meanwhile, the server 900 according to an embodiment of the present disclosure may include a hash value generator 911 and a digital signature generator 913.

The hash value generator 911 may generate hash value of binaries of the security interfaces 525, 535, and 545 in the respective virtual machines 520, 530, and 540, and the digital signature generator 913 may generate digital signature based on the generated hash value.

Meanwhile, the signal processing device 170 according to an embodiment of the present disclosure may further include the secured storage device 509 configured to store a digital signature and a public key of the external server 900.

Meanwhile, the signal processing device 170 according to an embodiment of the present disclosure may execute the security executor TEE configured to receive encrypted data form the server 900, to decrypt the encrypted data from the server 900 based on the digital signature and the public key of the server 900, and to transmit the decrypted data to the server virtual machine 520 or at least one of the plurality of guest virtual machines 530 or 540.

Meanwhile, unlike the drawing, the signal processing device 170 according to an embodiment of the present disclosure may further include a hardware-based security executor TEE.

Specifically, the signal processing device 170 according to an embodiment of the present disclosure may further include a security executor TEE configured to receive encrypted data form the external server 900, to decrypt the encrypted data from the server 900 based on the digital signature and the public key of the server 900, and to transmit the decrypted data to the server virtual machine 520 or at least one of the plurality of guest virtual machines 530 or 540. Accordingly, while increasing security when data is received from the external server 900, data may be transmitted to internal virtual machines.

Meanwhile, the security executor TEE may include a policy manager PM configured to set data so that data, shared with the first guest virtual machine 530 and the second guest virtual machine 540, may vary based on a sharing policy, and an interface SS for data exchange with the secured storage device 509.

Meanwhile, among the server virtual machine 520, the first guest virtual machine 530, and the second guest virtual machine 540, only the server virtual machine 520 may receive external input data and communication data. Accordingly, interface for the external input data and the communication data may be implemented efficiently.

In this case, the server virtual machine 520 may share the external input data or the communication data with at least one of the first guest virtual machine 530 or the second guest virtual machine 540.

To this end, the server virtual machine 520 may encrypt the external input data or the communication data and control the encrypted external input data or communication data to be stored in the shared memory 508, and may transmit a security key to at least one of the first guest virtual machine 530 or the second guest virtual machine 540.

In response thereto, at least one of the first guest virtual machine 530 or the second guest virtual machine 540 may decrypt the received external input data or communication data based on the security key. Accordingly, interface for the external input data and the communication data may be implemented efficiently.

Meanwhile, the server virtual machine 520 and the first and second guest virtual machines 530 and 540 may include security interfaces 525, 535, and 545, respectively, for decrypting the encrypted data received from the shared memory 508 or for storing the encrypted data in the shared memory 508.

For example, the security interface 525 in the server virtual machine 520 may perform encryption for storing the encrypted data in the shared memory 508, and the first and second guest virtual machines 530 and 540 may decrypt the encrypted data received from the shared memory 508. Accordingly, it is possible to increase security during data transmission. Particularly, it is possible to increase security during data transmission to the guest virtual machine 530 or 540. Further, it is possible to increase security during data transmission among the virtual machines 520 to 540.

Meanwhile, a verifier VFR executed in the hypervisor 505 may verify integrity of the server virtual machine 520 and the plurality of guest virtual machines 530 and 540.

Specifically, the verifier VFR executed in the hypervisor 505 may receive digital signature and hash value of the respective security interfaces 525, 535, and 545 in the server virtual machine 520 and the plurality of guest virtual machines 530 and 540, and a public value of the external server 900, may calculate hash value based on the public key of the server 90 and the digital signature of the respective security interfaces 525, 535, and 545, and may verify integrity of the server virtual machine 520 and the plurality of guest virtual machines 530 and 540 by comparing the calculated hash value with the received hash value. Accordingly, it is possible to increase security during data transmission to virtual machines whose integrity is verified.

For example, in response to the integrity of the server virtual machine 520 and the first guest virtual machine 530 being verified by the verifier VFR executed in the hypervisor 505, the server virtual machine 520 may determine that the server virtual machine 520 and the first guest virtual machine 530 are valid virtual machines, and in response to the integrity of the second guest virtual machine 540 not being verified by the verifier VFR, the server virtual machine 520 may determine that the second guest virtual machine 530 is not a valid virtual machine, may perform control so that data to the transmitted to the first guest virtual machine 530 may be stored in the shared memory 508, and may transmit a security key to the first guest virtual machine 530, without transmitting the security key to the second guest virtual machine 540. Accordingly, it is possible to increase security during data transmission to the virtual machines whose integrity is verified.

In another example, in response to the integrity of the server virtual machine 520, the first guest virtual machine 530, and the second guest virtual machine 540 being verified by the verifier VFR executed in the hypervisor 505, the server virtual machine 520 may perform control so that data to the transmitted to the first guest virtual machine 530 may be stored in the shared memory 508 and may transmit a security key to the first guest virtual machine 530 and the second guest virtual machine 540. Accordingly, it is possible to increase security during data transmission to the virtual machines whose integrity is verified.

In the drawing, an example is illustrated in which the policy manager PM in the security executor TEE shares a sharing policy or a topic based on the sharing policy with the respective security interfaces 525, 535, and 545 in the server virtual machine 520 and the first and second guest virtual machines 530 and 540.

Data to be transmitted to the respective security interfaces 525, 535, and 545 in the server virtual machine 520 and the first and second guest virtual machines 530 and 540 may vary depending on the sharing policy or the topic based on the sharing policy.

Meanwhile, the security interface 525 in the server virtual machine 520 may include a security manager TEma for data exchange with the security executor TEE and a shared buffer SBa for interfacing with the shared memory 508.

Similarly, the respective security interfaces 535 and 545 in the first and second guest virtual machines 530 and 540 may include security managers TEmb and TEmc, respectively, for data exchange with the security executor TEE and shared buffers SBb and SBc, respectively, for interfacing with the shared memory 508.

Meanwhile, in the drawing, ARs may be referred to as secure world, and Arn may be referred to as normal world. That is, the security executor TEE is the secure world, and the hypervisor 505 and the respective virtual machines 520, 530, and 540 may be the normal world.

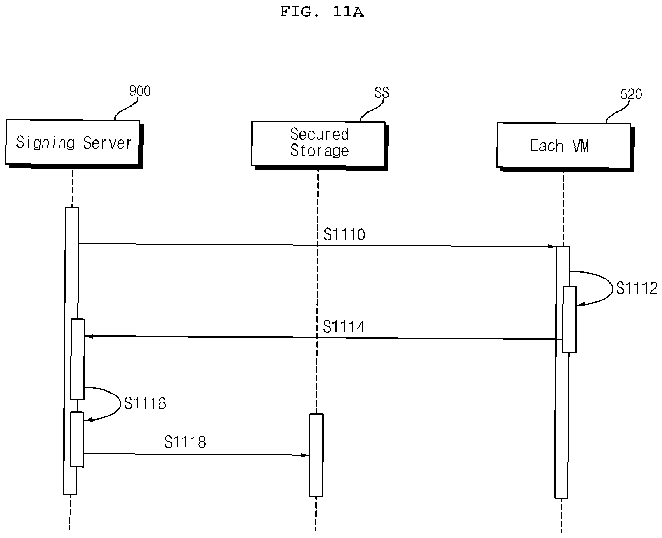

FIGS. 11A to 13 are diagrams referred to in the description of FIG. 10.

First, FIG. 11A is a diagram referred to in the description of operation of the external server 900. Particularly, FIG. 11A is a diagram explaining a signing process of the server 900.

Referring to the figure, the external server 900 may be a signing server.

First, the external server 900 transmits a request for hash value of binaries to the security interfaces 525, 535, and 545 of the respective virtual machines 520, 530, and 540 executed in the signal processing device 170 (S1110).

The security interfaces 525, 535, and 545 of the respective virtual machines 520, 530, and 540 may access binary files to generate hash value for the corresponding files in a predetermined manner (S1112), and may transmit the generated hash value to the server 900 (S1114).

Then, the external server 900 may sign the received hash value with its private key (S1116).

Subsequently, the external server 900 transmits the generated digital signature and a public key of the server 900 to the secured storage device SS in the signal processing device 170. In response thereto, the secured storage device SS in the signal processing device 170 stores the digital signature and the public key of the server 900.

Meanwhile, if there is a change in the binaries, the digital signature information may be updated.

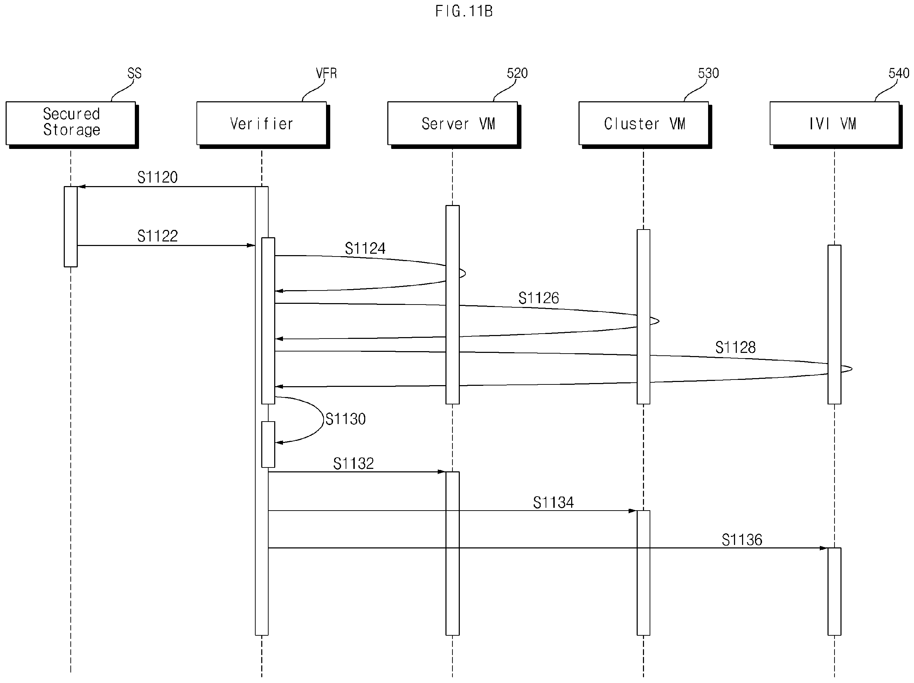

Next, FIG. 11B is a diagram referred to in the description of operation of a verifier. Particularly, FIG. 11B is a diagram explaining a verification process of a verifier VFR in the signal processing device 170.

Referring to the figure, the verifier VFR first accesses the secured storage device SS and transmits a request for the stored digital signature of binaries of the security interfaces 525, 535, and 545 in the respective virtual machines 520, 530, and 540 and the public key of the server 900 (S1120).

In response thereto, the secured storage device SS transmits the digital signature of the binaries of the security interfaces 525, 535, and 545 in the respective virtual machines 520, 530, and 540 and the public key of the server 900 to the verifier VFR (S1122).

Meanwhile, as the verifier VFR is capable of accessing file systems of all the virtual machines 520, 530, and 540, the verifier VFR accesses the security interfaces 525, 535, and 545 of the respective virtual machines 520, 530, and 540 and calculates hash value (S1124, S1126, and S1128).

Then, the verifier VFR compares the hash value, obtained in operations 1124 to 1128 (S1124 to S1128), with the hash value calculated based on the public key and the digital signature retrieved from the secured storage device SS (S1130).

Subsequently, based on comparison result values obtained corresponding to the number of virtual machines, if a comparison result value is true, the verifier VFR determines a virtual machine to be a valid virtual machine, and if a comparison result value is false, the verifier VFR determines a virtual machine to be an invalid virtual machine.

Next, the verifier VFR transmits determination results to the respective virtual machines 520, 530, and 540 (S1132, S1134, and S1136).

For example, in response to determination that the server virtual machine 520 and the first virtual machine 530 are valid virtual machines, data is shared between the server virtual machine 520 and the first guest virtual machine 530, but the data is not shared with the second virtual machine 540.

Meanwhile, in response to determination that the server virtual machine 520 and the first virtual machine 530 are valid virtual machines, connection may be made between the server virtual machine 520 and the first guest virtual machine 530, but no connection is made between the server virtual machine 520 and the second virtual machine 540.

In another example, in response to determination that the server virtual machine 520, the first virtual machine 530, and the second virtual machine 540 are valid virtual machines, data is shared among the server virtual machine 520, the first virtual machine 530, and the second virtual machine 540.

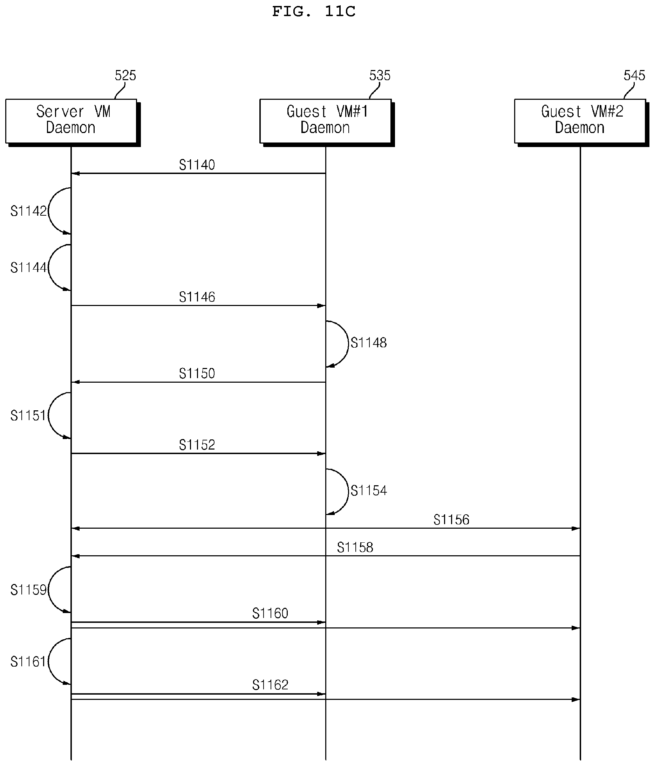

FIG. 11C is a diagram explaining an example of sharing data based on sharing of a symmetric key.

Referring to the figure, the security interface 535 in the first guest virtual machine 530 transmits a request for authentication to the security interface 525 in the server virtual machine 520 (S1140).

Then, the security interface 525 in the server virtual machine 520 verifies certificate validity of the security interface 535 in the first guest virtual machine 530 that has requested authentication (S1142).

Then, the security interface 525 in the server virtual machine 520 encrypts a symmetric key, to be used for sending and receiving encrypted data, with a public key of the security interface 535 in the first guest virtual machine 530 which is a counterpart virtual machine (S1144).

Subsequently, the security interface 525 in the server virtual machine 520 transmits the encrypted symmetric key to the security interface 535 in the first guest virtual machine 530 (S1146).

Next, the security interface 535 in the first guest virtual machine 530 decrypts the symmetric key with its private key to obtain the symmetric key (S1148).

Then, the security interface 535 in the first guest virtual machine 530 transmits a request for data subscription to the security interface 525 in the server virtual machine 520 (S1150).

In response thereto, the security interface 525 in the server virtual machine 520 encrypts the data with the symmetric key (S1151), and transmits the encrypted data to the security interface 535 in the first guest virtual machine 520 (S1152).

Subsequently, the security interface 535 in the first guest virtual machine 530 decrypts the encrypted data with the symmetric key (S1154).

Meanwhile, the security interface 545 in the second guest virtual machine 540 and the security interface 525 in the server virtual machine 520 may request mutual authentication (S1156).

Meanwhile, the security interface 545 in the second guest virtual machine 540 transmits a request for data subscription to the security interface 525 in the server virtual machine 520 (S1158).

In response thereto, the security interface 525 in the server virtual machine 520 encrypts the data with the symmetric key (S1159), and transmits the encrypted data to the security interface 535 in the first guest virtual machine 530 and the security interface 545 in the second guest virtual machine 540 (S1160).

Meanwhile, the security interface 525 in the server virtual machine 520 may generate new symmetric keys as random key values at predetermined intervals.

That is, the security interface 525 in the server virtual machine 520 may update the symmetric key.

Then, the security interface 525 in the server virtual machine 520 transmits the encrypted and updated symmetric key to the security interface 535 in the first guest virtual machine 530 and the security interface 545 in the second guest virtual machine 540 (S1162).

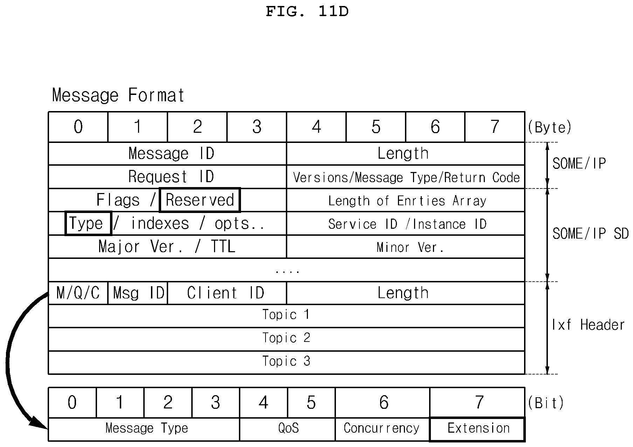

FIG. 11D is a diagram illustrating the format of a message, such as an authentication request or a subscription request of FIG. 11C.

Referring to the figure, the message, such as the authentication request or the subscription request, may include a message ID, a request ID, flag information, reserved information, type information, M/Q/C information in the interface header, and the like.

Meanwhile, the M/Q/C information in the interface header and the like may include an extension bit.

For example, the reserved information of [0x00] indicates Find Server VM, the reserved information of [0x01] indicates Offer Server VM, the reserved information of [0x02] indicates Request capability, and the reserved information of [0x03] indicates Request capability ACK.

Meanwhile, the type information of [0x00] indicates Find Service, the type information of [0x01] indicates Offer Service, the type information of [0x02] indicates Request Service, the type information of [0x03] indicates Request Service ACK, the type information of [0x04] indicates Find EVENT group, the type information of [0x05] indicates Publish Event group, the type information of [0x06] indicates Subscribe Event group, and the type information of [0x07] indicates Subscribe Event group ACK.

Meanwhile, the extension bit of [0x00] indicates only IxF, and the extension bit of [0x01] indicates IxF with SOME/IP.

Meanwhile, the server virtual machine 520 may perform control so that data, shared between the first guest virtual machine 530 and the second guest virtual machine 540, may vary depending on a sharing policy. Accordingly, based on the sharing policy, it is possible to differentiate data to be transmitted.

Meanwhile, in response to the sharing policy being updated, the server virtual machine 520 may set data shared between the first guest virtual machine 530 and the second guest virtual machine 540. Accordingly, data to be transmitted may be set up based on the updating of the sharing policy.

Meanwhile, the server virtual machine 520 may receive position information data, camera data, or sensing data, and may be configured to transmit the position information data to the first guest virtual machine 530 and not be transmitted to the second guest virtual machine 540, by using the shared memory 508 based on the sharing policy. Accordingly, based on the sharing policy, it is possible to differentiate data to be transmitted.

Meanwhile, in response to the sharing policy being updated, the server virtual machine 520 may be configured to transmit the position information data to the first guest virtual machine 530 and the second guest virtual machine 540 by using the shared memory 508. Accordingly, data to be transmitted may be set up based on the updating of the sharing policy.

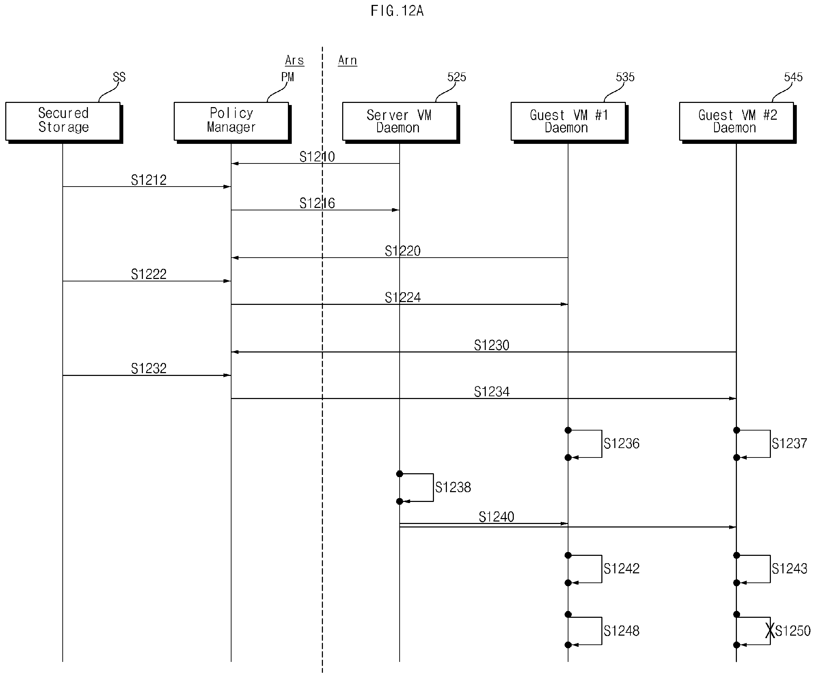

The sharing policy and the updating of the sharing policy will be described below with reference to FIGS. 12A to 12D.

FIG. 12A is a diagram explaining a sharing policy.

Referring to the figure, in Publisher-Subscriber communication, data transmitted by the publisher is transmitted to all subscribers requesting subscription.

Meanwhile, in order to prevent an unallowed application from accessing secured data by subscription, the policy manager PM manages a sharing policy table showing whether applications are accessible to each topic.

The sharing policy table managed by the policy manager PM is transmitted to all the security interfaces 525, 535, and 545 of the respective virtual machines 520, 530, and 540, and the security interfaces 525, 535, and 545 of the respective virtual machines 520, 530, and 540 determine whether to transmit data to applications by referring to the table.

First, the security interfaces 525, 535, and 545 of the respective virtual machines 520, 530, and 540 respectively transmit requests for the sharing policy table to the policy manager PM at the time of initialization (S1210, S1220, and S1230) .

For example, in operation 1210 (S1210), the security interface 525 of the server virtual machine 520 transmits a request for the sharing policy table to the policy manager PM at the time of initialization.

In another example, in operation 1220 (S1220), the security interface 535 of the first guest virtual machine 530 transmits a request for the sharing policy table to the policy manager PM at the time of initialization.

In yet another example, in operation 1230 (S1230), the security interface 545 of the second guest virtual machine 540 transmits a request for the sharing policy table to the policy manager PM at the time of initialization.

Then, the policy manager PM reads each sharing policy table from the secured storage device SS (S1212, S1222, and S1232) for the respective security interfaces.

Then, the policy manager PM transmits the sharing policy table to the security interfaces 525, 535, and 545 of the respective virtual machines 520, 530, and 540 (S1216, S1224, and S1234).

Next, an Augmented Reality (AR) navigation application, running on the first guest virtual machine, subscribes to the position information (S1236).

To this end, the security interface 535 of the first guest virtual machine 530 may transmit a request for subscription to position information to the security interface 525 of the server virtual machine 520.

Subsequently, a Mixed Reality (MR) navigation application, running on the second guest virtual machine 540, subscribes to the position information (S1237).

To this end, the security interface 545 of the second guest virtual machine 540 may transmit a request for subscription to the position information to the security interface 525 of the server virtual machine 520.

Then, the security interface 525 of the server virtual machine 520 publishes the position information (S1238).

To this end, the security interface 525 of the server virtual machine 520 may receive the position information via a position information sensor or a communication module, etc., and may publish the position information.

Meanwhile, the security interface 525 of the server virtual machine 520 may encrypt the position information, and may transmit the encrypted position information data to the security interface 535 of the first guest virtual machine 530 and the security interface 545 of the second guest virtual machine 540 (S1240).

Meanwhile, the security interface 535 of the first guest virtual machine 530 compares the sharing policy tables (S1242), and if the encrypted position information is allowed based on the sharing policy tables, the security interface 535 of the first guest virtual machine 530 decrypts the position information and transmits the decrypted position information to the Augmented Reality (AR) navigation application (S1248).

Meanwhile, the security interface 545 of the second guest virtual machine 540 compares the sharing policy tables (S1242), and if the encrypted position information is not allowed based on the sharing policy tables, the security interface 545 of the second guest virtual machine 540 decrypts the position information, and may not transmit the decrypted position information to the Mixed Reality (MR) navigation application (S1248).

Meanwhile, unlike the drawing, the security interface 525 of the server virtual machine 520 may be configured to transmit the position information data to the security interface 535 of the first guest virtual machine 530 and not be transmitted to the security interface 545 of the second guest virtual machine 540, by using the shared memory 508 based on the sharing policy. Accordingly, based on the sharing policy, it is possible to differentiate data to be transmitted.

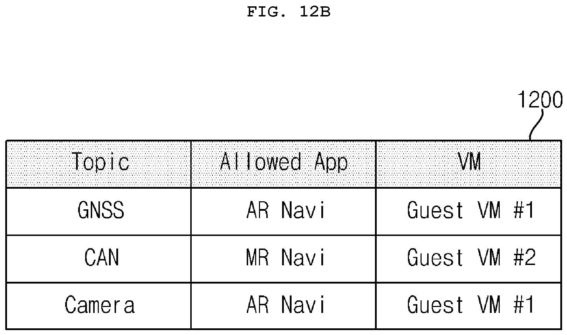

FIG. 12B is a diagram illustrating an example of a sharing policy table 1200.

Referring to the figure, an example is illustrated in which position information GNSS may be used in the AR navigation application and is allowed only for the first guest virtual machine 530.

CAN data CAN, which is sensor data, is used in the MR navigation application and is allowed only for the second guest virtual machine 540.

Camera data Camera is used in the AR navigation application and is allowed only for the first guest virtual machine 530.

For example, the security interface 525 of the server virtual machine 520 may be configured to transmit position information GNSS or the camera data Camera to the security interface 535 of the first guest virtual machine 530, but not be transmitted to the security interface 545 of the second guest virtual machine 540.

In another example, the security interface 525 of the server virtual machine 520 may not be configured to transmit the CAN data CAN to the security interface 535 of the first guest virtual machine 530, but be transmitted to the security interface 545 of the second guest virtual machine 540.

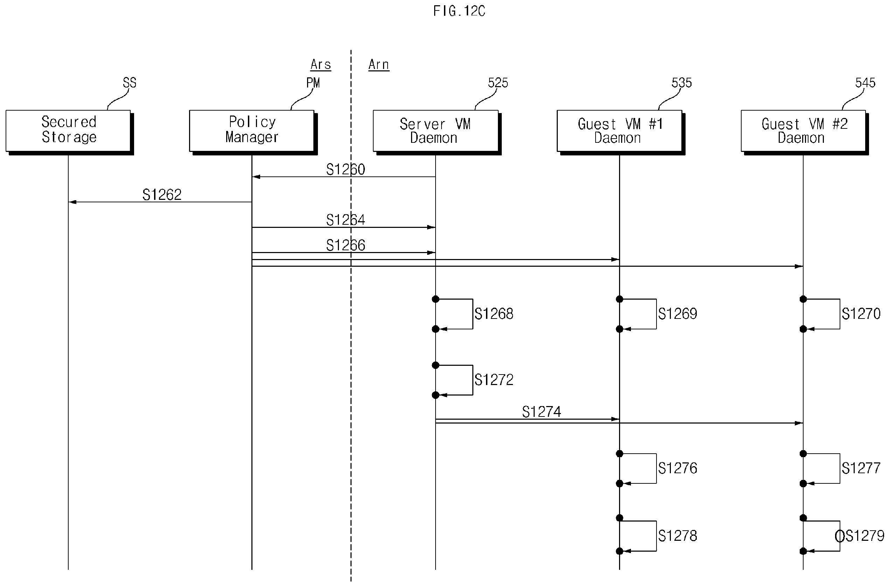

FIG. 12C is a diagram explaining an updated sharing policy.

Referring to the figure, a sharing policy table may be updated at a run time, and if the sharing policy table is updated, the policy manager PM stores the updated table in the secured storage device SS.

The policy manager PM shares the updated table with the security interfaces 525, 535, and 545 of the respective virtual machines 520, 530, and 540 to synchronize sharing policy tables of the entire system.

First, the security interface 525 of the server virtual machine 520 transmits a request for updating the sharing policy table to the policy manager PM (S1260).

In response thereto, the policy manager PM stores an updated sharing policy table in the secured storage device SS (S1262), and notifies completion of updating the sharing policy table to the security interface 525 of the server virtual machine 520 (S1264).

Then, the policy manager PM transmits the updated sharing policy table to the respective security interfaces 525, 535, and 545 of the respective virtual machines 520, 530, and 540 (S1266).

In response thereto, the security interfaces 525, 535, and 545 of the respective virtual machines 520, 530, and 540 respectively store the updated sharing policy table (S1268, S1269, and S1270) .

Meanwhile, in response to the request for subscription to the position information, the security interface 525 of the server virtual machine 520 publishes the position information (S1272).

To this end, the security interface 525 of the server virtual machine 520 may receive the position information via a position information sensor or a communication module, etc. and may publish the position information.

Meanwhile, the security interface 525 of the server virtual machine 520 encrypts the position information and transmits the encrypted position information data to the security interface 535 of the first guest virtual machine 530 and the security interface 545 of the second guest virtual machine 540 (S1274).

Meanwhile, the security interface 535 of the first guest virtual machine 530 compares the sharing policy tables (S1276), and if the encrypted position information is allowed based on the updated sharing policy tables, the security interface 535 of the first guest virtual machine 530 decrypts the position information and transmits the decrypted position information to the AR navigation application (S1278).

Meanwhile, the security interface 545 of the second guest virtual machine 540 compares the sharing policy tables (S1277), and if the encrypted position information is allowed based on the updated sharing policy tables, the security interface 545 of the second guest virtual machine 540 decrypts the position information and transmits the decrypted position information to the MR navigation application (S1279).

Unlike FIG. 12A, the security interface 545 of the second guest virtual machine 540 may also transmit the decrypted position information to the MR navigation application according to the updated sharing policy table.

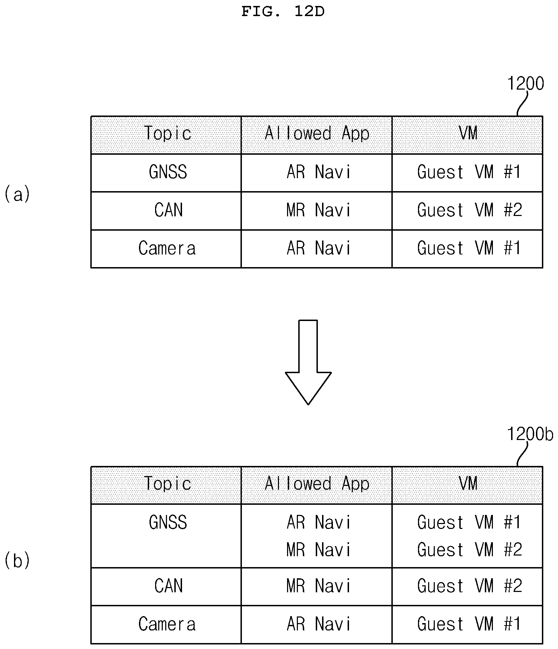

FIG. 12D is a diagram illustrating an example of an updated sharing policy table 1200b.

Referring to the figure, the sharing policy table 1200 shows that, as in FIG. 12A, position information GNSS and camera data Camera are allowed only for the first guest virtual machine 530, and CAN data CAN, which is sensor data, is allowed only for the second guest virtual machine 540.

Meanwhile, the sharing policy table may be updated, and according to the updated sharing policy table 1200b, the position information GNSS is allowed for both the first guest virtual machine 530 and the second guest virtual machine 540, and the CAN data CAN as sensor data is allowed only for the second guest virtual machine 540, and the camera data Camera is allowed only for the first guest virtual machine 530.

Accordingly, the security interface 525 of the server virtual machine 520 may perform control so that the position information data may be transmitted to the security interface 535 of the first guest virtual machine 530 and the security interface 545 of the second guest virtual machine 540 by using the shared memory 508 according to the updated sharing policy.

Then, the security interface 535 of the first guest virtual machine 530 and the security interface 545 of the second guest virtual machine 540 may transmit the position information to each of the AR navigation application and the MR navigation application.

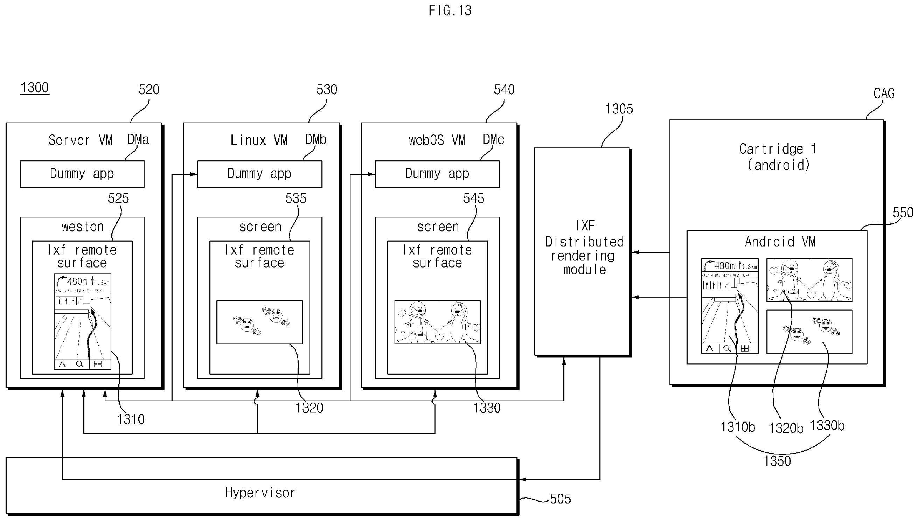

FIG. 13 is a diagram referred to in the description of operation of a cartridge and the signal processing device 170.

Referring to the figure, the security interfaces 525, 535, and 545 of the respective virtual machines 520, 530, and 540 in the signal processing device 170 may respectively transmit a first image 1310, a second image 1320, and a third image 1330, which are individually generated, to a distribution device 1305 via the hypervisor 505 and the like.

A cartridge CAG executed in an external signal processing device (not shown) may execute a virtual machine 550 on the Android OS.

Meanwhile, the cartridge CAG may transmit a request for image transmission to the distribution device 1305.

In response to the request, the distribution device 1305 may transmit the first image 1310, the second image 1320, and the third image 1330 to the virtual machine 550 in the cartridge CAG.

Then, the virtual machine 550 in the cartridge CAG may generate an image 1350 based on the first image 1310, the second image 1320, and the third image 1350 and may display the image 1350.

In this case, the first image 1310 may be a map image, the second image 1320 may be a game image, and the third image 1330 may be a multimedia image.

Meanwhile, the security interfaces 525, 535, and 545 of the respective virtual machines 520, 530, and 540 may respectively encrypt the generated first, second, and third images 1310, 1320, and 1330 with a symmetric key and the like, and may transmit the encrypted images 1310, 1320, and 1330 to the distribution device 1305.

Accordingly, the virtual machine 550 in the cartridge CAG may receive the encrypted first, second, and third images 1310, 1320, and 1330, may decrypt the encrypted first, second, and third images 1310, 1320, and 1330 based on the symmetric key and the like, may generate the image 1350 based on the respective decrypted images, and may display the image 1350.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a shared memory; and
a processor configured to perform signal processing for display mounted in a vehicle,
wherein the processor is configured to execute a server virtual machine and a plurality of guest virtual machines on a hypervisor in the processor,
wherein a first guest virtual machine of the plurality of guest virtual machines is configured to operate for a first display, and a second guest virtual machine of the plurality of guest virtual machines is configured to operate for a second display,
wherein the server virtual machine is configured to store data to be transmitted to at least one of the first guest virtual machine or the second guest virtual machine in the shared memory, and to transmit a security key to at least one of the first guest virtual machine or the second guest virtual machine.

2. The signal processing device of claim 1, wherein at least one of the first guest virtual machine or the second guest virtual machine is configured to receive the data stored in the shared memory, and to decrypt the received data based on the security key.

3. The signal processing device of claim 1, wherein the server virtual machine is configured to store data to be transmitted to at least one of the first guest virtual machine or the second guest virtual machine in the shared memory, to encrypt a symmetric key, and to transmit a security key including the encrypted symmetric key to at least one of the first guest virtual machine or the second guest virtual machine.

4. The signal processing device of claim 1, wherein the server virtual machine is configured to store data to be transmitted in the shared memory for transmitting identical data to the first guest virtual machine and the second guest virtual machine, and to transmit the security key to the first guest virtual machine and the second guest virtual machine.

5. The signal processing device of claim 4, wherein the first guest virtual machine and the second guest virtual machine are configured to receive the identical data stored in the shared memory, and to decrypt the received identical data based on the security key.

6. The signal processing device of claim 1, wherein in response to integrity of the server virtual machine and the first guest virtual machine being verified by a verifier executed in the hypervisor, the server virtual machine is configured to store data to be transmitted to the first guest virtual machine in the shared memory, and to transmit the security key to the first guest virtual machine.

7. The signal processing device of claim 1, wherein the server virtual machine and the plurality of guest virtual machines comprise respective security interface to decrypt the encrypted data received from the shared memory, or to store the encrypted data in the shared memory.

8. The signal processing device of claim 7, wherein the verifier in the hypervisor is configured to:
receive digital signature and hash value of the respective security interfaces in the server virtual machine and the plurality of guest virtual machines, and a public key of an external server; and
calculate hash value based on the public key of the server and the digital signature of the respective security interfaces, and compare the calculated hash value with the received hash value to verify integrity of the server virtual machine and the plurality of guest virtual machines.

9. The signal processing device of claim 8, wherein in response to integrity of the server virtual machine and the first guest virtual machine being verified by the verifier executed in the hypervisor, and in response to integrity of the second guest virtual machine not being verified by the verifier, the server virtual machine is configured to store data to be transmitted to the first guest virtual machine in the shared memory, and to transmit the security key to the first guest virtual machine, without transmitting the security key to the second guest virtual machine.

10. The signal processing device of claim 1, wherein the server virtual machine is configured to change data shared with the first guest virtual machine and the second guest virtual machine based on a sharing policy.

11. The signal processing device of claim 10, wherein in response to the sharing policy being updated, the server virtual machine is configured to set data to be shared with the first guest virtual machine and the second guest virtual machine.

12. The signal processing device of claim 1, wherein the server virtual machine is configured to:
receive position information data, camera data, or sensing data; and
transmit the position information data to the first guest virtual machine and not be transmitted to the second guest virtual machine, by using the shared memory based on the sharing policy.

13. The signal processing device of claim 12, wherein in response to the sharing policy being updated, the server virtual machine is configured to transmit the position information data to the first guest virtual machine and the second guest virtual machine, by using the shared memory based on the sharing policy.

14. The signal processing device of claim 1, further comprising:
a secured storage device configured to store a digital signature and a public key of an external server; and
a security executor configured to receive the encrypted data from the server, to decrypt the encrypted data from the server based on the digital signature and the public key of the server, and to transmit the decrypted data to the server virtual machine or at least one of the plurality of guest virtual machines.

15. The signal processing device of claim 14, wherein the verifier executed in the hypervisor is configured to:
access the secured storage device and receive the digital signature and hash value of the respective security interfaces of the server virtual machine or the plurality of guest virtual machines, and a public key of the server;
calculate hash value based on the public key of the server and the digital signature of the respective security interfaces of the virtual machines; and
compare the calculated hash value with the received hash value to verify integrity of the server virtual machine and the plurality of guest virtual machines.

16. The signal processing device of claim 1, further comprising:
a secured storage device configured to store a digital signature and a public key of an external server; and
a security executor configured to receive encrypted data from the server, to decrypt the encrypted data from the server based on the digital signature and the public key of the server, and to transmit the decrypted data to the server virtual machine,
wherein the server virtual machine is configured to encrypt the decrypted data received from the server, to store the encrypted data in the shared memory, and to transmit a security key to at least one of the first guest virtual machine or the second guest virtual machine.

17. The signal processing device of claim 1, wherein only the server virtual machine among the server virtual machine, the first guest virtual machine, and the second guest virtual machine is configured to receive external input data and communication data.

18. A signal processing device comprising:
a shared memory; and
a processor configured to perform signal processing for display mounted in a vehicle, and to execute a server virtual machine and a plurality of guest virtual machines on a hypervisor,
a secured storage device configured to store a digital signature and a public key of an external server; and
a security executor configured to receive encrypted data from the server, to decrypt the encrypted data from the server based on the digital signature and the public key of the server, and to transmit the decrypted data to the server virtual machine,
wherein the server virtual machine is configured to encrypt the decrypted data received from the server, to store the encrypted data in the shared memory, and to transmit a security key to at least one of the first guest virtual machine or the second guest virtual machine.

19. The signal processing device of claim 18, wherein in response to integrity of the server virtual machine, the first guest virtual machine, and the second guest virtual machine being verified by a verifier executed in the hypervisor, the server virtual machine is configured to encrypt the decrypted data received from the server, to store the encrypted data in the shared memory, and to transmit the security key to the first guest virtual machine and the second guest virtual machine.

20. A vehicle display apparatus comprising:
a first display;
a second display; and
a signal processing device comprising a processor configured to perform signal processing for the first display and the second display,
wherein the signal processing device comprises the signal processing device of any one of claims 1 to 19.
